# EUROPÄISCHE PATENTANMELDUNG

(11) **EP 2 418 792 A1**
(43) Veröffentlichungstag der Anmeldung: **15.02.2012**
(21) Anmeldenummer: 11153693.4
(22) Anmeldetag: 08.02.2011
(51) Int. Cl.: H04H 60/15

(54) **Digital Multimedia Broadcast (DMB) mit effizienter Übertragung der Daten zur Zugangsbeschränkung im Transportstrom-Packet mit der Programmzuordnungstabelle (Program Association Table = PAT)**

(30) Priorität: 19.05.2010 DE 102010029114
(71) Anmelder: Fraunhofer-Gesellschaft zur Förderung der Angewandten Forschung e.V., 80686 München (DE)
(72) Erfinder: Bartel-Kurz, Birgit, 91054 Erlangen (DE); Doehla, Stefan, 91052 Erlangen (DE); Prosch, Markus, 91058 Erlangen (DE)
(74) Vertreter: Burger, Markus

(57) **Zusammenfassung**

Ein Transportstrom-Bereitsteller zum Bereitstellen einer Mehrzahl von Transportstrom-Paketen, die eine digitale Medieninformation beschreiben, ist ausgelegt, um ein Transportstrom-Paket eines ersten Pakettyps mit einer Programmzuordnungstabelle und einer Schlüsselinformation zur Entschlüsselung einer verschlüsselten Medieninformation bereitzustellen. Die Programmzuordnungstabelle enthält eine Zuordnung zwischen einer Programmnummer und einem Pakettyp-Identifizierer eines weiteren TransportstromPakets eines zweiten Pakettyps. Der Transportstrom-Bereitsteller ist ausgelegt, um ein Transportstrom-Paket des zweiten Pakettyps so bereitzustellen, dass das Transportstrom-Paket des zweiten Pakettyps einen Verweis auf Pakettyp-Identifizierer von Transportstrom-Nutzdaten-Paketen enthält, die Inhalte verschiedener Inhaltstypen der digitalen Medieninformation beschreiben.

## Beschreibung

### Technisches Gebiet

Ausführungsbeispiele gemäß der Erfindung beziehen sich auf einen Transportstrom-Bereitsteller zum Bereitstellen einer Mehrzahl von Transportstrom-Paketen, die eine digitale Medieninformation beschreiben. Weitere Ausführungsbeispiele gemäß der Erfindung beziehen sich auf einen DAB-Signal-Bereitsteller. Weitere Ausführungsbeispiele gemäß der Erfindung beziehen sich auf einen Transportstrom-Analysierer zum Bereitstellen einer Zugangsbeschränkungsinformation zum Entschlüsseln einer zugangsbeschränkten digitalen Medieninformation auf der Basis eines Transportstroms. Weitere Ausführungsbeispiele gemäß der Erfindung beziehen sich auf einen DAB-Empfänger. Weitere Ausführungsbeispiele gemäß der Erfindung beziehen sich auf entsprechende Verfahren und entsprechende Computerprogramme. Weitere Ausführungsbeispiele gemäß der Erfindung beziehen sich auf ein Transportstrom-Signal. Weitere Ausführungsbeispiele gemäß der Erfindung beziehen sich auf ein Grundgerüst zum bedingten Zugriff für den digitalen Multimediarundfunk (DMB) zum bitratensparenden Transport von Informationen betreffend den bedingten Zugriff.

### Hintergrund der Erfindung

Der digitale Multimedia-Rundfunk, der unter der Abkürzung DMB ("digital multimedia broadcasting") bekannt ist, ist eine Erweiterung des bisherigen digitalen Audiorundfunks, der unter der Abkürzung DAB ("digital audio broadcasting") bekannt ist, um audiovisuelle Inhalte. Der digitale Multimedia-Rundfunk DMB "erbt" die volle DAB-Funktionalität, ist aber um die Möglichkeit ergänzt, zusätzlich MPEG2-codierte Transportströme mit Videoinhalten und/oder Audioinhalten zu übertragen.

Sendeseitig wird dazu der bestehende DAB-Multiplexer um einen DMB-Gateway ergänzt, das den MPEG2-Transportstrom von einem DMB-Codierer (DMB-Encoder) entgegennimmt.

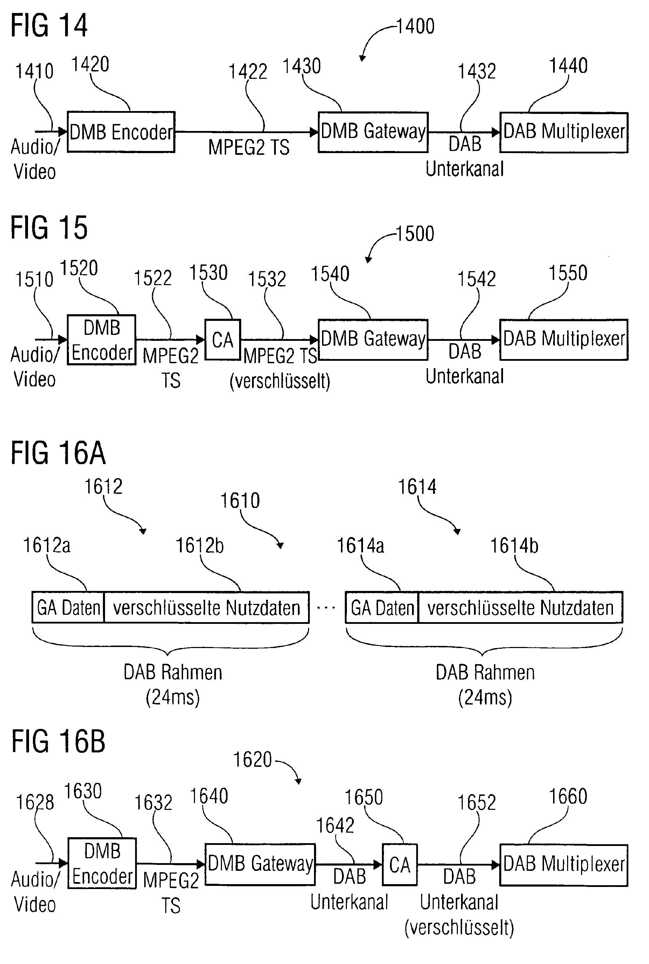

Fig. 14 zeigt eine schematische Darstellung einer DMB-Signalverarbeitung. Die DMB-Signalverarbeitung 1400 gemäß Fig. 14 empfängt eine Multimedia-Information 1410, die 2011281869 beispielsweise ein Audiosignal und/oder ein Videosignal umfasst. Die DMB-Signalverarbeitung 1400 umfasst ferner einen DMB-Codierer 1420 (auch als "DMB-Encoder" bezeichnet), der ausgelegt ist, um basierend auf der Multimedia-Information 1410 einen MPEG2-Transportstrom 1422 zu erzeugen. Die Signalverarbeitung 1400 umfasst ferner ein DMB-Gateway 1430, das ausgelegt ist, um den MPEG2-Transportstrom 1422 zu empfangen und basierend darauf einen DAB-Unterkanal 1432 (auch als "DAB-Subchannel" bezeichnet) zu erzeugen. Die Signalverarbeitung 1400 umfasst ferner einen DAB-Multiplexer 1440, der ausgelegt ist, um den DAB-Unterkanal 1432 zu einem DAB-Signal hinzuzufügen, das beispielsweise eine Mehrzahl von DAB-Unterkanälen zusammenfasst. Somit wird beispielsweise ein DAB-Multiplexsignal erhalten.

Für Details, wie ein DMB-konformes Signal bzw. ein DAB-Signal, das DMB-Informationen umfasst, erhalten werden kann, wird beispielsweise auf die entsprechenden Veröffentlichungen der Europäischen Rundfunkunion ("European Broadcasting Union" bzw. EBU) verwiesen. Details sind beispielsweise in der Veröffentlichung ETSI TS 102 428, V1.2.1 mit dem Titel "Digital Audio Broadcasting (DAB); DMB video services; User application specification" und den darin referenzierten Dokumenten beschrieben.

Der digitale Multimedia-Rundfunk DMB ist eine Technologie, mit der "Femsehen" auf mobilen Empfängergeräten erlebbar werden soll. DMB stellt damit eine Alternative zu Technologien wie beispielsweise DVB-H dar.

Eine interessante Anwendung ist Bezahl-Fernsehen (auch als "PAY-TV" bekannt), bei dem Inhalte geschützt (verschlüsselt) übertragen werden und nur berechtigten Nutzern zur Verfügung stehen. Dieses Konzept wird im Folgenden als Zugangsbeschränkung bzw. Zugriffsbeschränkung bezeichnet. Die Verschlüsselung der Inhalte und die Bereitstellung von notwendigen Zusatzmeldungen übernimmt ein System zum bedingten Zugang (bzw. zum bedingten Zugriff), das manchmal auch als "Conditional Access System" bzw. kurz als "CA" bezeichnet wird. Die Zusatzmeldungen sind z. B. Berechtigungsmeldungen (auch als "EMM" bezeichnet) oder Meldungen, die den aktuellen Inhaltsschlüssel ("Content key") enthalten (auch als "ECM" bezeichnet). Berechtigungsmeldungen werden zum Teil auch als Berechtigungs-Verwaltungs-Meldungen EMM bezeichnet. Meldungen, die einen aktuellen Inhaltsschlüssel enthalten, werden manchmal auch als Berechtigungs-Steuerungs-Meldungen ECM bezeichnet. Die Zusatzmeldungen werden im Folgenden auch kurz "CA-Informationen" genannt und werden ebenfalls über den Rundfunkkanal übertragen. Ein Ziel ist es, den Überhang bzw. "Overhead", der durch das Aussenden der CA-Informationen (Informationen für den bedingten Zugang bzw. Zugriff) entsteht, so gering wie möglich zu halten.

In Anbetracht dessen ist es die Aufgabe der vorliegenden Erfindung, ein Konzept zu schaffen, das es ermöglicht, eine zugangsbeschränkte Medieninformation effizient (mit geringem Ressourcenverbrauch) zu übertragen.

### Zusammenfassung der Erfindung

Ein Ausführungsbeispiel gemäß der Erfindung schafft einen Transportstrom-Bereitsteller zum Bereitstellen einer Mehrzahl von Transportstrom-Paketen, die eine digitale Medieninformation beschreiben. Der Transportstrom-Bereitsteller ist ausgelegt, um ein Transportstrom-Paket eines ersten Pakettyps mit einer Programmzuordnungstabelle und einer Zugangsbeschränkungsinformation mit einer Schlüsselinformation zur Entschlüsselung einer verschlüsselten Medieninformation bereitzustellen. Die Programmzuordnungstabelle enthält eine Zuordnung zwischen einer Programmnummer und einem Pakettyp-Identifizierer (PID) eines weiteren Transportstrom-Pakets eines zweiten Pakettyps. Der Transportstrom-Bereitsteller ist ferner ausgelegt, um ein Transportstrom-Paket des zweiten Pakettyps (mit einem entsprechenden Pakettypidentifizierer) so bereitzustellen, dass das Transportstrom-Paket des zweiten Pakettyps einen Verweis auf Pakettyp-Identifizierer von Transportstrom-Nutzdaten-Paketen enthält, die Inhalte verschiedener Inhaltstypen der digitalen Medieninformation beschreiben.

Es ist ein Kerngedanke der vorliegenden Erfindung, dass eine ressourceneffiziente Einbettung einer Zugangsbeschränkungsinformation (CA-Information), die eine Schlüssel-information zur Entschlüsselung einer verschlüsselten Medieninformation umfasst, in Transportstrom-Pakete mit einer Programmzuordnungstabelle erfolgen kann. So wurde nämlich herausgefunden, dass Transportstrom-Pakete (beispielsweise bei DMB) in der Programmzuordnungstabelle regelmäßig freie Bit-Kapazitäten aufweisen. Es handelt sich beispielsweise bei DMB um einen SPTS (Einzelprogramm-Transportstrom, in Englisch auch als "single program transport stream" bezeichnet) Datenstrom und damit ist nur genau ein Programm im Datenstrom enthalten. So kann die Einbettung der Zugangsbeschränkungsinformation erfolgen, ohne eine zusätzliche Information in die Transportstrom-Nutzdaten-Pakete einzubringen oder zusätzliche Transportstrom-Pakete zu verwenden. So ist eine Datenmenge, die insgesamt in den Transportstrom-Paketen des ersten Pakettyps mit der Programmzuordnungstabelle übertragen werden muss, üblicherweise deutlich geringer als die Datenmenge, die durch Transportstrom-Nutzdaten-Pakete zu übertragen ist. Im Übrigen sind typischerweise die Transportstrom-Nutzdaten-Pakete bereits ohne die Verwendung eines Zugangsbeschränkungsmechanismus regelmäßig (bzw. häufig) vollständig mit Nutzdaten gefüllt. Dies kommt daher, dass ein Nutzdaten-Codierer (z. B. ein Audiocodierer oder ein Videocodierer) typischerweise unabhängig davon arbeitet, ob die codierten Audiodaten oder Videodaten mit einem Zugangsbeschränkungsmechanismus versehen werden. Ein derartiger Audiocodierer bzw. Videocodierer wird daher üblicherweise versuchen, die gesamte Datenkapazität der Transportstrom-Nutzdaten-Pakete auszunutzen, um somit eine optimale Audioqualität bzw. Videoqualität zu erzielen.

Es wurde somit herausgefunden, dass eine Einbringung der Zugangsbeschränkungsinformation in die Transportstrom-Nutzdaten-Pakete, oder auch die Verwendung zusätzlicher Transportstrom-Pakete, dazu führen würde, dass ein Audiocodierer bzw. Videocodierer entweder nicht die volle Datenrate, die durch die Transportstrom-Nutzdaten-Pakete übertragbar ist, ausnutzen dürfte, um somit Platz in den Transportstrom-Nutzdaten-Paketen zu lassen, oder dass die Transportstrom-Nutzdaten-Pakete umgepackt werden müssten, falls die Zugangsbeschränkungsinformation in vollständig mit Nutzdaten gefüllte Transportstrom-Nutzdaten-Pakete eingebettet werden sollte. Auf der anderen Seite wurde herausgefunden, dass die Transportstrom-Pakete des ersten Pakettyps, die die Programm-zuordnungstabelle enthalten, bei sehr vielen Anwendungen in zuverlässiger bzw. regelmäßiger Weise freie Datenkapazitäten aufweisen, die durch die Einbettung der Zugangsbeschränkungsinformation ausgenutzt werden kann.

Zudem wurde herausgefunden, dass die Einbettung der Zugangsbeschränkungsinformation in die Transportstrom-Pakete des ersten Pakettyps einen besonders schnellen Zugriff auf die verschlüsselten Medieninformationen ermöglicht, da somit erreicht werden kann, dass die Zugangsbeschränkungsinformationen bereits unmittelbar nach der Auswertung des Transportstrom-Pakets des ersten Pakettyps bereitstehen. Eine Auswertung des Transportstrom-Pakets des ersten Pakettyps, insbesondere der darin enthaltenen Programmzuordnungstabelle, ist aber ohnehin zwingend erforderlich, um eine digitale Medieninformation auswerten bzw. wiedergeben zu können. Insofern ermöglicht das erfindungsgemäße Konzept, einen Zugangsbeschränkungsmechanismus zu schaffen, der ohne merkliche zusätzliche Verzögerungen bei der Wiedergabe der digitalen Medieninformation auskommt.

Bei einem bevorzugten Ausführungsbeispiel weisen Transportstrom-Pakete der verschiedenen Pakettypen, also insbesondere die Transportstrom-Pakete des ersten Pakettyps und des zweiten Pakettyps sowie die Transportstrom-Nutzdaten-Pakete, identische Paketlängen auf. Dies erleichtert die Übertragung der Transportstrom-Pakete in manchen Netzwerken. Gleichzeitig sorgt diese Charakteristik dafür, dass in den Transportstrom-Paketen des ersten Pakettyps zusätzlich zu der Programmzuordnungstabelle vergleichsweise große Datenmengen einbettbar sind. Dies ermöglicht insbesondere die Einbettung der Zugangsbeschränkungsinformation zusätzlich zu der Programmzuordnungstabelle.

Bei einem bevorzugten Ausführungsbeispiel ist der Transportstrom-Bereitsteller ausgelegt, um die Zugangsbeschränkungsinformation in einem Zusatzinformationsfeld des Transportstrom-Pakets des ersten Pakettyps hinzuzufügen, und um eine Anwesenheit des Zusatzinformationsfelds durch einen Merker zu signalisieren. Die Einbettung der Zugangsbeschränkungsinformation in ein Zusatzinformationsfeld des Transportstrom-Pakets des ersten Pakettyps ermöglicht es dabei, dass das Transportstrom-Paket des ersten Pakettyps trotz der Hinzufügung der Zugangsbeschränkungsinformation in Übereinstimmung mit den geltenden Standards ist, die keine Vorgaben im Hinblick auf die Dateninhalte, die in dem Zusatzinformationsfeld eingebettet sind, machen. Insofern ermöglicht es das Erfindungskonzept, Zugangsbeschränkungsinformationen ohne Verletzung bestehender Standards zu verwenden und dennoch eine im Vergleich zu den standardgemäßen Systemen verbesserte Funktionalität zu erhalten. So ermöglicht es das Erfindungskonzept, den Zugangsbeschränkungsmechanismus bereits auf Transportstrom-Ebene einzusetzen, wobei der Zugangsbeschränkungsmechanismus mit geringem Aufwand zu einer bereits codierten und paketierten digitalen Medieninformation hinzufügbar ist.

Bei einem bevorzugten Ausführungsbeispiel ist der Transportstrom-Bereitsteller ausgelegt, um die Transportstrom-Pakete so bereitzustellen, dass jedes der Transportstrom-Pakete an einer vorgegebenen Position einer Transportstrom-Paket-Präambel einen Pakettyp-Identifizierer aufweist, der einen Pakettyp identifiziert. Der Transportstrom-Bereitsteller ist dabei ausgelegt, um die Transportstrom-Pakete so bereitzustellen, dass ein Transportstrom-Paket mit der Programmzuordnungstabelle und der Zugangsbeschränkungsinformation einen Verweis auf einen Pakettyp-Identifizierer eines weiteren Transportstrom-Pakets mit einer Programmabbildungstabelle, die Pakettyp-Identifizierer für einen oder mehrere Typen von Datenströmen umfasst, aufweist, ohne dass das Transportstrom-Paket mit der Programmzuordnungstabelle und der Zugangsbeschränkungsinformation selbst den Nutzinhalt der digitalen Medieninformation beschreibt. Insofern kann eine hierarchische Trennung zwischen Transportstrom-Paketen, die Verwaltungsinformationen enthalten (z. B. die Programmzuordnungstabelle und die Zugangsbeschränkungsinformation), und Transportstrom-Paketen, die den Nutzinhalt der digitalen Medieninformation (also codierte Audioinformationen und/oder codierte Bildinformationen und/oder codierte Videoinformationen) beschreiben, erreicht werden. Somit ist die Einbettung der Zugangsbeschränkungsinformation unabhängig von dem Nutzinhalt der digitalen Medieninformation.

Bei einem bevorzugten Ausführungsbeispiel ist der Transportstrom-Bereitsteller ausgelegt, um das Transportstrom-Paket mit der Programmzuordnungstabelle und der Zugangsbeschränkungsinformation so bereitzustellen, dass das entsprechende Transportstrom-Paket des ersten Pakettyps eine Abfolge von Abschnitten unterschiedlicher Zugangsbeschränkungsinformationen aufweist. Dabei weist bevorzugt einer der Abschnitte eine Berechtigungsverwaltungsnachricht (zum Beispiel eine EMM-Nachricht) oder einen Verweis auf eine Berechtigungsverwaltungsnachricht auf, und ein anderer der Abschnitte weist eine Berechtigungsschlüsselnachricht (zum Beispiel eine ECM-Nachricht) oder einen Verweis auf eine Berechtigungsschlüsselnachricht auf. Die Abschnitte der Zugangsbeschränkungsinformation weisen jeweils einen Tabellenidentifizierer auf, der die Art der in dem Abschnitt enthaltenen Zugangsbeschränkungsinformation beschreibt. Ferner weisen die Abschnitte der Zugangsbeschränkungsinformation noch eine Längeninformation auf, die eine Länge der in dem Abschnitt enthaltenen Informationen beschreibt.

Durch das entsprechende Konzept ist es möglich, in strukturierter Weise verschiedenartige Zugangsbeschränkungsinformationen in ein einziges Transportstrom-Paket einzubetten. Insbesondere ermöglicht die abschnittsweise Einbettung decoderseitig einen effektiven Zugriff auf die tatsächlich benötigte Information, da decoderseitig Abschnitte, deren Informationsinhalt nicht benötigt wird, bei der Auswertung einfach übersprungen werden können. Dies wird insbesondere durch den Längenidentifizierer ermöglicht. Im Übrigen erlaubt die beschriebene Art der Einbettung der Zugangsbeschränkungsinformation, die beispielsweise in einem Zusatzinformationsfeld erfolgen kann, auch weitere Informationen zu dem entsprechenden Transportstrom-Paket hinzuzufügen, die sich nicht auf die Zugangsbeschränkung beziehen.

Im Übrigen ist es optional möglich, dass Querverweise zwischen einzelnen der Abschnitte mit unterschiedlichen Zugangsbeschränkungsinformationen existieren. Beispielsweise kann zwischen Abschnitten mit Querverweisen und Abschnitten, die die eigentlichen Zugangsbeschränkungsdaten aufweisen, unterschieden werden. Dadurch wird es ermöglicht, auch die Zugangsbeschränkungsinformationen hierarchisch zu strukturieren und/oder innerhalb des Zusatzinformationsfeldes Verweise zwischen Transportstrom-Paketen unterschiedlicher Pakettypen nachzubilden.

Bei einem bevorzugten Ausführungsbeispiel ist der Transportstrom-Bereitsteller ausgelegt, um den Transportstrom so bereitzustellen, dass der Transportstrom einen Verweis auf einen separaten Kanal, in dem Berechtigungsverwaltungsnachrichten (zum Beispiel EMM Nachrichten) übertragen werden, umfasst. Dieses Konzept ist vorteilhaft, wenn das Datenvolumen der Berechtigungsverwaltungsnachrichten sehr groß ist und/oder die Berechtigungsverwaltungsnachrichten eine Information enthalten, die für mehrere Multimedia-Programme von Bedeutung ist.

Ein Ausführungsbeispiel gemäß der Erfindung schafft einen DAB-Signalbereitsteller zum Bereitstellen eines DAB-Signals, das eine zugangsbeschränkte Medieninformation umfasst. Der DAB-Signalbereitsteller umfasst einen Transportstrom-Bereitsteller, wie er vorstehend beschrieben wurde. Der Transportstrom-Bereitsteller ist hierbei bevorzugt ausgelegt, um Transportstrom-Pakete eines ersten Pakettyps bereitzustellen, die eine Programmzuordnungstabelle und eine Zugangsbeschränkungsinformation umfassen. Der Transportstrom-Bereitsteller ist ferner ausgelegt, um Transportstrom-Pakete eines zweiten Pakettyps so bereitzustellen, dass die Transportstrom-Pakete des zweiten Pakettyps einen Verweis auf Pakettyp-Identifizierer von Transportstrom-Nutzdaten-Paketen enthalten, die Inhalte verschiedener Inhaltstypen der digitalen Medieninformation beschreiben. Der Transportstrom-Bereitsteller ist ferner ausgelegt, um Transportstrom-Pakete weiterer Pakettypen (zum Beispiel eines dritten Pakettyps und eines vierten Pakettyps, sowie gegebenenfalls zusätzlicher Pakettypen) bereitzustellen, die jeweils den Inhalt eines Medientyps (zum Beispiel codierte Audiodaten oder Videodaten) der zugangsbeschränkten Medieninformation beschreiben. Beispielsweise können der dritte Pakettyp und der vierte Pakettyp Inhalte unterschiedlicher Medientypen der zugangsbeschränkten Medieninformation beschreiben. Dabei ist ein Inhalt zumindest einiger der Transportstrom-Pakete der weiteren Pakettypen verschlüsselt.

Die Transportstrom-Pakete des ersten Pakettyps, des zweiten Pakettyps und der weiteren Pakettypen sind dabei Teil eines MPEG2-Transportstroms. Die Zugangsbeschränkungsinformation, die in den Transportstrom-Paketen des ersten Pakettyps enthalten ist, umfasst eine Schlüsselinformation zum Entschlüsseln der verschlüsselten Inhalte der Transportstrom-Pakete der weiteren Pakettypen.

Bei einem Ausführungsbeispiel gibt es die vier Pakettypen PAT (Programmzuordnungstabelle), PMT (Programmabbildungstabelle), Audio und Video. In der Praxis können aber zusätzlich noch andere Typen, z.B. Deskriptoren und Szene, vorhanden sein.

Der DAB-Signalbereitsteller umfasst ferner einen DAB-Dienste-Kombinierer, der ausgelegt ist, um den MPEG2-Transportstrom mit einem oder mehreren anderen DAB-Diensten zu kombinieren, um das DAB-Signal zu erhalten. Der DAB-Signalbereitsteller ermöglicht es, DAB-Dienste zusammen mit einer Multimedia-Information zu verbreiten, wobei die Multimedia-Informationen, die den anderen DAB-Diensten hinzugefügt werden, auf der Ebene von Transportstrom-Paketen verschlüsselt sind. Dadurch wird es ermöglicht, dass die Zugangsbeschränkung zu den Multimedia-Inhalten unabhängig von irgendwelchen Zugangsbeschränkungen zu den restlichen DAB-Diensten gehandhabt wird. Da im Übrigen die Zugangsbeschränkung bereits auf der Ebene der Transportstrom-Pakete erfolgt, sind sämtliche Mechanismen zum Fehlerschutz, die bei der Kombinationen der DAB-Dienste eingesetzt werden, im Hinblick auf die zugangsgeschützte Multimedia-Information und die zugehörigen Schlüsselinformationen uneingeschränkt wirksam, so dass hier eine hohe Zuverlässigkeit bei der Datenübertragung gegeben ist.

Außerdem ist gemäß dem Erfindungskonzept die Hinzufügung von Zugangsbeschränkungsinformationen ohne Veränderung des DAB-Protokolls möglich.

Zudem kann durch das erfindungsgemäße Konzept die verfügbare Datenrate nahezu optimal ausgenutzt werden, da die Zugangsbeschränkungsinformation (mit der Schlüssel-information) nicht in den Transportstrom-Nutzdaten-Paketen (also den Transportstrom-Paketen der weiteren Pakettypen, beispielsweise des dritten Pakettyps bzw. des vierten Pakettyps) eingebettet wird, sondern in den Transportstrom-Paketen des ersten Pakettyps, die die Programmzuordnungstabelle enthalten. In diesen Paketen des ersten Pakettyps ist typischerweise selbst bei voller Ausnutzung der Transportstrom-Nutzdaten-Pakete durch die Multimedia-Daten noch ausreichend Platz (im Sinne von Bits) verfügbar. Insofern ermöglicht das genannte Konzept die Realisierung eines Zugangsbeschränkungsmechanismus, der einerseits die Anforderungen der relevanten Standards erfüllt und der auf der anderen Seite von dem momentanen Bitratenbedarf der zugangsbeschränkten Multimedia-Information unabhängig ist.

Ein Ausführungsbeispiel gemäß der Erfindung schafft im Übrigen einen Transportstrom-Analysierer zum Bereitstellen einer Zugangsbeschränkungsinformation zum Entschlüsseln einer zugangsbeschränkten digitalen Medieninformation auf der Basis eines Transportstroms. Der Transportstrom-Analysierer umfasst einen Pakettyp-Identifizierer, der ausgelegt ist, um ein Paket eines vorgegebenen ersten Pakettyps, das einen vorgegebenen ersten Pakettyp-Identifizierer aufweist und das eine Programmzuordnungstabelle enthält, als ein identifiziertes Paket zu identifizieren. Der Transportstrom-Analysierer umfasst ferner einen Paket-Analysierer, der ausgelegt ist, um das identifizierte Paket nach einer Zugangsbeschränkungsinformation zu durchsuchen und eine gefundene Zugangsbeschränkungsinformation bereitzustellen. Der entsprechende Transportstrom-Analysierer basiert auf der Erkenntnis, dass ein Transportstrom-Paket, das eine Programmzuordnungstabelle enthält, sich besonders gut für eine Einbettung einer Zugangsbeschränkungsinformation eignet, wie dies bereits oben detailliert erläutert wurde. Daher ist der Pakettyp-Identifizierer ausgelegt, um genau solche Transportstrom-Pakete zu identifizieren und daraus die Zugangsbeschränkungsinformation zu extrahieren.

Bei einem bevorzugten Ausführungsbeispiel ist der Transportstrom-Analysierer ausgelegt, um die Programmzuordnungstabelle in dem Transportstrom-Paket des vorgegebenen ersten Pakettyps auszuwerten und basierend auf der Programmzuordnungstabelle einen zweiten Pakettyp-Identifizierer zu bestimmen, der einem Transportstrom-Paket mit einer Programmabbildungstabelle zugeordnet ist. Der Transportstrom-Analysierer umfasst ferner einen Pakettyp-Zuordnungs-Bestimmer, der ausgelegt ist, um basierend auf dem bestimmten zweiten Pakettyp-Identifizierer ein Transportstrom-Paket mit einer Programmabbildungstabelle in dem Transportstrom zu identifizieren und die Programmabbildungstabelle auszuwerten, um eine Information darüber zu erhalten, welche Pakettyp-Identifizierer Transportstrom-Nutzdaten-Paketen zugeordnet sind, die Medieninhalte der zugangsgebeschränkten digitalen Medieninformation enthalten. Somit verwirklicht der Transportstrom-Analysierer ein hierarchisches Konzept, bei dem aus Transportstrom-Paketen des ersten Pakettyps und des zweiten Pakettyps lediglich Verwaltungsinformationen extrahiert werden, während hingegen geeignete Nutzdaten aus Transportstrom-Nutzdaten-Paketen anderer Pakettypen (z. B. eines dritten Pakettyps und eines vierten Pakettyps, die sich von dem ersten und dem zweiten Pakettyp unterscheiden) extrahiert werden.

Bei einem bevorzugten Ausführungsbeispiel umfasst der Transportstrom-Analysierer ferner einen Entschlüssler, der ausgelegt ist, um verschlüsselte Medieninhalte, die in Transportstrom-Nutzdaten-Paketen mit in der Programmabbildungstabelle beschriebenen Pakettyp-Identifizierern enthalten sind, unter Verwendung der in dem Transportstrom-Paket des vorgegebenen ersten Pakettyps enthaltenen Zugangsbeschränkungsinformation zu entschlüsseln.

Bei einem weiteren bevorzugten Ausführungsbeispiel ist der Paket-Analysierer ausgelegt, um das identifizierte Paket des vorgegebenen ersten Pakettyps daraufhin zu untersuchen, ob ein Zusatzinformationsfeld eine oder mehrere Tabellen aufweist, die durch vorgegebene Tabellenidentifizierer gekennzeichnet sind und eine Zugangsbeschränkungsinformation enthalten. Der Paket-Analysierer ist ferner ausgelegt, um die in identifizierten Tabellen enthaltene Zugangsbeschränkungsinformation bereitzustellen. Somit wird durch den Paket-Analysierer ein Zusatzinformationsfeld (beispielsweise ein Privatdatenfeld) ausgewertet, wodurch es ermöglicht wird, ohne Verstoß gegen bestehende Standards eine Zugangsbeschränkungsinformation auszuwerten, die effizienter einsetzbar ist als bekannte Zugangsbeschränkungsinformationen.

Bei einem bevorzugten Ausführungsbeispiel ist der Paket-Analysierer ausgelegt, um ansprechend auf ein Auffinden einer ersten Tabelle, die durch einen ersten vorgegebenen Tabellenidentifizierer gekennzeichnet ist und eine Zugangsbeschränkungsinformation enthält, und abhängig von einer in der ersten Tabelle enthaltenen Tabellenlängeninformation zu überprüfen, ob das Zusatzinformationsfeld des identifizierten Pakets des vorgegebenen ersten Pakettyps anschließend an die erste Tabelle eine weitere Tabelle aufweist, die eine Zugangsbeschränkungsinformation enthält, und die in der weiteren Tabelle enthaltene Zugangsbeschränkungsinformation bereitzustellen. Durch die Verwendung mehrerer unabhängiger Tabellen in einem einzigen Zusatzinformationsfeld und durch die entsprechende Auswertung dieser Tabellen wird es ermöglicht, auf Decodierer-Seite flexibel darauf zu reagieren, welche Zugangsbeschränkungsinformationen in dem jeweiligen Transportstrom-Paket des ersten Pakettyps enthalten sind bzw. welcher Umfang an Zugangsbeschränkungsinformationen in dem Transportstrom-Paket des ersten Pakettyps übertragen wird.

Ein Ausführungsbeispiel gemäß der Erfindung schafft im Übrigen einen DAB-Empfänger mit einem DAB-Dienste-Trenner, der ausgelegt ist, um einen MPEG2-Transportstrom aus einem DAB-Signal, das zusätzlich zu dem MPEG2-Transportstrom einen oder mehrere weitere DAB-Dienste umfasst, zu extrahieren. Der DAB-Empfänger umfasst ferner einen Transportstrom-Analysierer, wie er oben erläutert wurde. Der Transportstrom-Analysierer ist ausgelegt, um den MPEG2-Transportstrom von dem Dienste-Trenner zu empfangen und die Zugangsbeschränkungsinformation zum Entschlüsseln einer zugangsbeschränkten digitalen Medieninformation auf der Basis des Transportstroms bereitzustellen. Der DAB-Empfänger umfasst ferner einen Inhalts-Entschlüssler, der ausgelegt ist, um verschlüsselte Medieninhalte der zugangsbeschränkten digitalen Medieninformation unter Verwendung der Zugangsbeschränkungsinformation zu entschlüsseln. Der entsprechende DAB-Empfänger bringt im Wesentlichen dieselben Vorteile, wie sie bereits im Hinblick auf den DAB-Signal-Bereitsteller beschrieben wurden.

Ausführungsbeispiele gemäß der vorliegenden Erfindung schaffen im Übrigen entsprechende Verfahren und entsprechende Computerprogramme.

Weitere Ausführungsbeispiele gemäß vorliegenden Erfindung schaffen im Übrigen ein entsprechendes Transportstrom-Signal, das die oben beschriebenen Transportstrom-Pakete umfasst, und das somit die oben erläuterten Vorteile mit sich bringt.

### Figurenkurzbeschreibung

Ausführungsbeispiele gemäß der vorliegenden Erfindung werden nachfolgend Bezug nehmend auf die beiliegenden Figuren näher erläutert. Es zeigen:
- Fig. 1: ein Blockschaltbild eines Transportstrom-Bereitstellers gemäß einem Ausführungsbeispiel der vorliegenden Erfindung;
- Fig. 2A und 2B: Blockschaltbilder von DAB-Signal-Bereitstellern gemäß Ausführungsbeispielen der vorliegenden Erfindung;
- Fig. 3: ein Blockschaltbild eines Transportstrom-Analysierers gemäß einem Ausführungsbeispiel der vorliegenden Erfindung;
- Fig. 4: ein Blockschaltbild eines DAB-Empfängers gemäß einem Ausführungsbeispiel der vorliegenden Erfindung;
- Fig. 5A: eine schematische Darstellung von Transportstrom-Paketen eines MPEG2-Transportstroms;
- Fig. 5B: eine Syntax-Darstellung eines MPEG2-Transportstroms;
- Fig. 6: eine schematische Darstellung von Transportstrom-Paketen, die bei der Übertragung eines Multimedia-Inhalts zum Einsatz kommen;
- Fig. 7: eine schematische Darstellung eines Transportstrom-Pakets, das eine Zugangsbeschränkungsinformation und eine Programmzuordnungstabelle umfasst;
- Fig. 8A: eine Syntax-Beschreibung eines Transportstrom-Pakets gemäß ISO/IEC 13818-1;
- Fig.8B: eine Syntax-Beschreibung eines Anpassungs-Feldes eines Transportstrom-Pakets gemäß ISO/IEC 13818-1 unter Berücksichtigung der Einschränkungen gemäß ETSI TS 102 428 V1.2.1;
- Fig. 9A: eine Syntax-Beschreibung einer Tabelle mit Zugangsbeschränkungsinformationen gemäß ISO/IEC 13818-1;
- Fig. 9B: eine Syntax-Beschreibung von Deskriptoren zur Verwendung in einer Tabelle gemäß Fig. 9A gemäß ISO/IEC 13818-1;
- Fig. 10: eine Syntax-Beschreibung einer weiteren Tabelle für Zugangsbeschränkungsinformationen;
- Fig. 11: eine Syntax-Beschreibung einer weiteren Tabelle für Zugangsbeschränkungsinformationen;
- Fig. 12: eine tabellarische Darstellung von möglichen Bitkombinationen zur Beschreibung eines Zugangsbeschränkungsstatus;
- Fig. 13: eine Syntax-Beschreibung eines Programm-Zuordnungs-Abschnitts gemäß ISO-IEC 13818;
- Fig. 14: ein Blockschaltbild eines herkömmlichen DAB-Signal-Bereitstellers;
- Fig. 15: ein Blockschaltbild eines Vergleichs-DAB-Signal-Bereitstellers; und
- Fig. 16: ein Blockschaltbild eines weiteren Vergleichs-DAB-Signal-Bereitstellers.

### Detaillierte Beschreibung der Ausführungsbeispiele

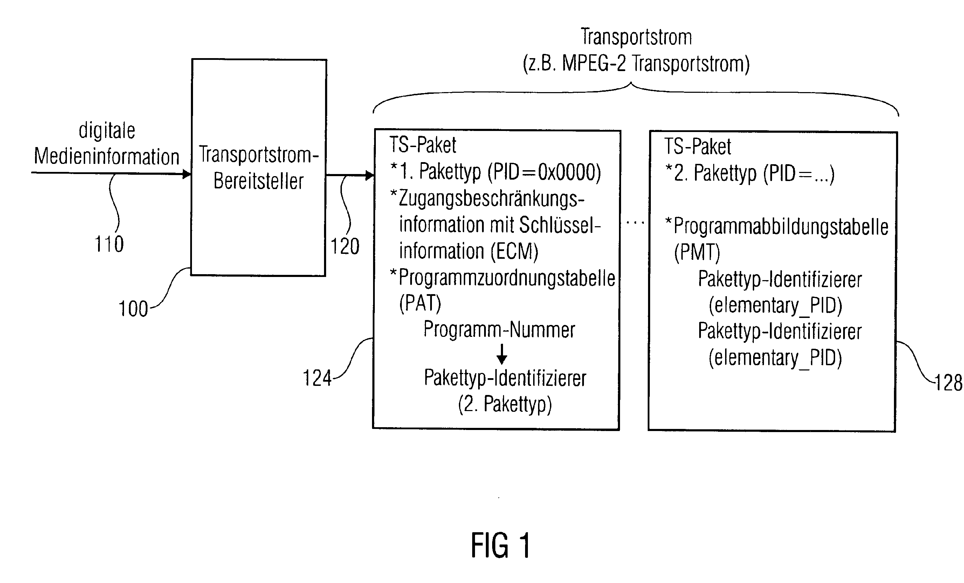

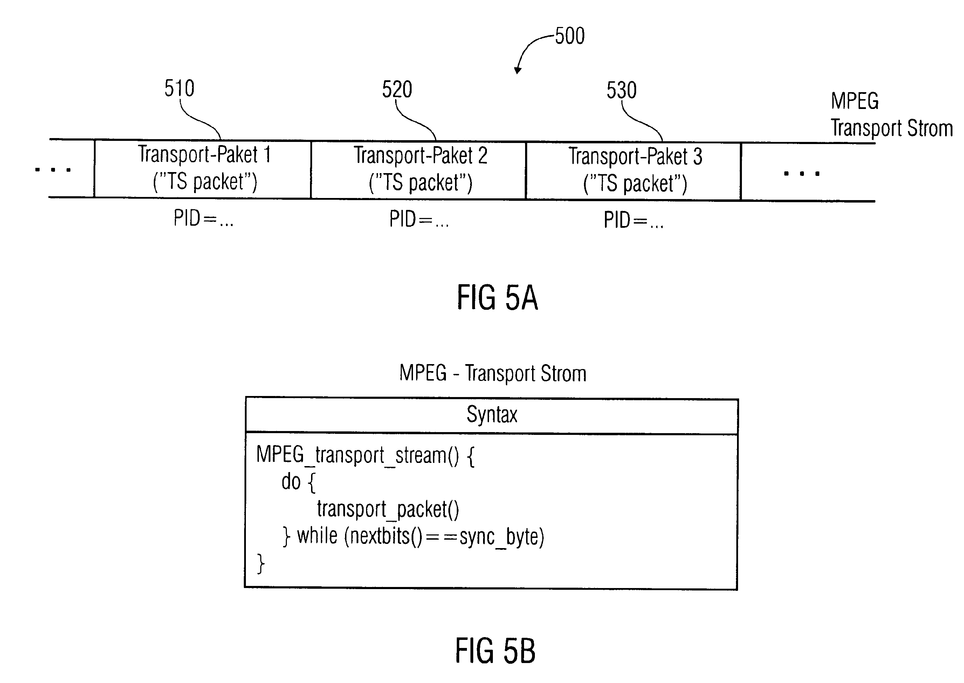

Im Folgenden wird zunächst die grundlegende Struktur des erfindungsgemäßen Transportstrom-Bereitstellers, des erfindungsgemäßen DAB-Signal-Bereitstellers, des erfindungsgemäßen Transportstrom-Analysierers und des erfindungsgemäßen DAB-Empfängers anhand der Fig. 1 - 4 beschrieben. Anschließend wird anhand der Fig. 5A - 13 der Transportstrom, der erfindungsgemäß bereitgestellt bzw. ausgewertet wird, im Detail beschrieben. Anschließend werden anhand der Fig. 15 und 16 noch weitere Konzepte zur Realisierung einer Zugangsbeschränkung beschrieben, die als Vergleichsbeispiele dienen.

### 1. Transportstrom-Bereitsteller gemäß Fig. 1

Fig. 1 zeigt ein Blockschaltbild eines Transportstrom-Bereitstellers 100 zum Bereitstellen einer Mehrzahl von Transportstrom-Paketen, die eine digitale Medieninformation (bevorzugt eine digitale Multimedia-Information mit mehreren Medientypen) beschreiben. Der Transportstrom-Bereitsteller 100 ist ausgelegt, um die digitale Medieninformation 110 zu empfangen und basierend darauf einen Transportstrom 120 bereitzustellen. Der Transportstrom-Bereitsteller 100 ist dabei ausgelegt, um ein erstes Transportstrom-Paket 124 eines ersten Pakettyps mit einer Programmzuordnungstabelle (PAT) und einer Zugangsbeschränkungsinformation mit einer Schlüsselinformation (ECM) zur Entschlüsselung einer verschlüsselten Medieninformation bereitzustellen. Die Programmzuordnungstabelle (PAT) umfasst (bzw. beschreibt) dabei eine Zuordnung zwischen einer Programmnummer und einem Pakettyp-Identifizierer eines weiteren Transportstrom-Pakets eines zweiten Pakettyps. Das erste Transportstrom-Paket 124 kann beispielsweise einen ersten Pakettyp-Identifizierer PID umfassen, der den ersten Pakettyp signalisiert. Der Transportstrom-Bereitsteller 100 ist ferner ausgelegt, um ein zweites Transportstrom-Paket 128, das den zweiten Pakettyp aufweist, so bereitzustellen, dass das Transportstrom-Paket 128 des zweiten Pakettyps einen Verweis auf Pakettyp-Identifizierer von Transportstrom-Nutzdaten-Paketen enthält, die Inhalte verschiedener Inhaltstypen der digitalen Medieninformation beschreiben. Das Transportstrom-Paket 128 kann somit beispielsweise in einer Programmabbildungstabelle eine Mehrzahl von Pakettyp-Identifizierern umfassen, wobei durch die Programmabbildungstabelle oder eine darin referenzierte Information ferner definiert sein kann, welchem Medientyp Transportstrom-Pakete mit einem bestimmten Pakettyp-Identifizierer zugeordnet sind. Das Transportstrom-Paket 128 des zweiten Pakettyps kann im Übrigen selbst durch einen entsprechenden Pakettyp-Identifizierer gekennzeichnet sein, der in dem Transportstrom-Paket des ersten Pakettyps angegeben ist.

Weitere Details im Hinblick darauf, wie genau der Transportstrom aussehen kann, werden im Folgenden noch näher erläutert.

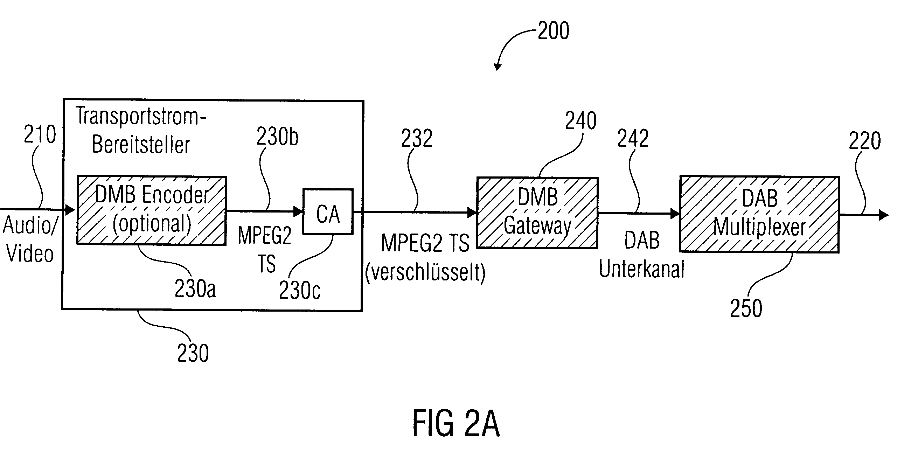

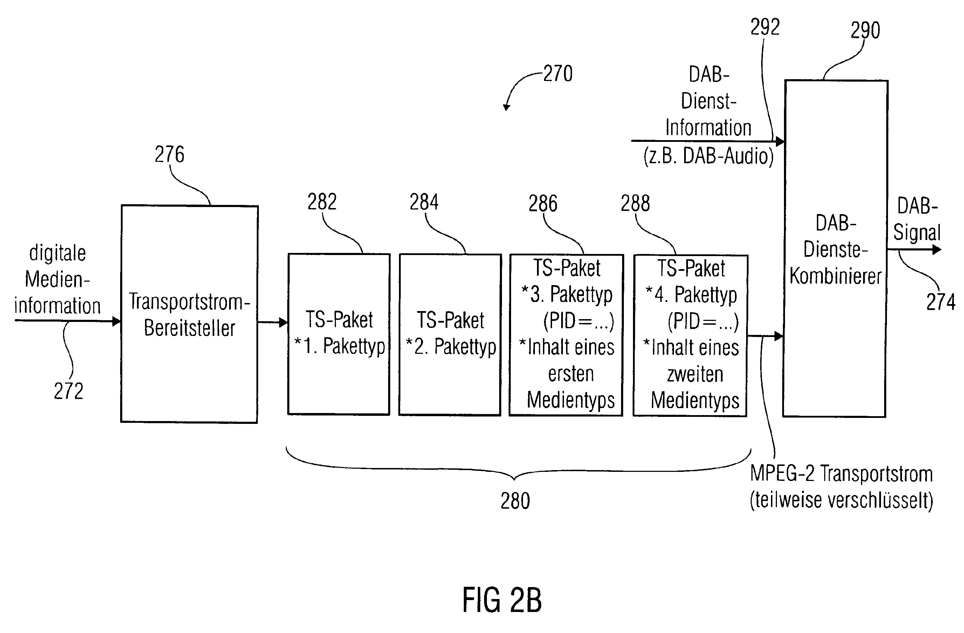

### 2. DAB-Signal-Bereitsteller gemäß den Fig. 2A und 2B

### 2.1. DAB-Signal-Bereitsteller gemäß Fig. 2A

Im Folgenden wird Bezug nehmend auf die Fig. 2A ein erfindungsgemäßes Gerüst für eine Zugangsbeschränkung für den digitalen Multimedia-Rundfunk DMB beschrieben. Die Zugangsbeschränkung wird manchmal auch als bedingter Zugriff bzw. "Conditional Access" (abgekürzt: CA) bezeichnet. Im Folgenden werden die verschiedenen Aspekte dieses Konzepts beschrieben und es wird insbesondere eine Verfahrensbeschreibung geliefert.

### 2.1.1 Verschlüsselungsebene

Ein Aspekt des erfindungsgemäßen Konzepts besteht darin, eine geeignete Verschlüsselungsebene zu wählen. Bei Ausführungsbeispielen gemäß der Erfindung wird auf der MPEG2-Transportstrom-Ebene verschlüsselt. Das heißt, die komplette Nutzlast ("Payload") eines MPEG2-Transportstrom-Pakets wird bei Bedarf verschlüsselt. Der MPEG2-Transportstrom-Nachrichtenkopf (auch als "Header" bezeichnet) bleibt unverschlüsselt und zeigt an, ob das MPEG2-Transportstrom-Paket verschlüsselt ist. Ferner zeigt der MPEG2-Transportstrom-Nachrichtenkopf in diesem Falle (also wenn das MPEG2-Transportstrom-Paket verschlüsselt ist) auch an, welcher Schlüssel (aus einer Mehrzahl von Schlüsseln, die beispielsweise "gerader Schlüssel" und "ungerader Schlüssel" bezeichnet werden) zur Entschlüsselung notwendig ist. Die eigentliche Verschlüsselung sowie die Signalisierung, ob verschlüsselt wird und welcher Schlüssel ("ungerade" bzw. "gerade") gegebenenfalls genutzt wird, erfolgt analog zu dem digitalen Videorundfunk DVB.

Fig. 2A zeigt ein Blockschaltbild eines DAB-Signal-Bereitstellers 200, der ausgelegt ist, um eine digitale Medieninformation 210 zu empfangen und basierend darauf ein DAB-Signal 220 bereitzustellen. Die digitale Medieninformation 210 kann bevorzugt eine Multimedia-Information sein, die Informationen zu mehreren Medientypen (z. B. Audioinformation und Bildinformation oder aber Audioinformation und Videoinformation) umfasst. Der DAB-Signal-Bereitsteller umfasst einen Transportstrom-Bereitsteller 230, der ausgelegt ist, um basierend auf der digitalen Medieninformation 210 einen zumindest teilweise verschlüsselten MPEG2-Transportstrom 232 bereitzustellen.

Der Transportstrom-Bereitsteller 230 umfasst optional einen DMB-Codierer 230a (auch als "DMB-Encoder" bezeichnet), der ausgelegt ist, um basierend auf der digitalen Medieninformation 210 einen MPEG2-Transportstrom 230b bereitzustellen, der die digitale Medieninformation 210 in einem Transportstrom-Format darstellt, das beispielsweise den Spezifikationen ETSI TS 102 428, V1.2.1 entspricht. Der Transportstrom-Bereitsteller 230 umfasst ferner einen Zugangsbeschränkungs-Hinzufüger 230c, der ausgelegt ist, um den MPEG2-Transportstrom 230b zu empfangen und basierend darauf den zumindest teilweise verschlüsselten MPEG2-Transportstrom 232 zu erzeugen. Der Zugangsbeschränkungs-Hinzufüger ist dabei ausgelegt, um einerseits einen Teil des MPEG2-Transportstroms 230b, beispielsweise einige oder alle der Transportstrom-Nutzdaten-Pakete des MPEG2-Transportstroms 230b, zu verschlüsseln und andererseits dem MPEG2-Transportstrom 230b eine Zugangsbeschränkungsinformation hinzuzufügen, die es einem Decoder, der ein entsprechendes Geheimnis kennt, ermöglicht, eine Entschlüsselung der verschlüsselten Informationen des MPEG2-Transportstroms 232 vorzunehmen.

Es sei hier allerdings darauf hingewiesen, dass die Funktionalität des DMB-Codierers 230a auch außerhalb des Transportstrom-Bereitstellers 230 realisiert sein kann, so dass der DMB-Codierer 230a dann nicht Teil des Transportstrom-Bereitstellers 230 ist. Im Übrigen können die Funktionalitäten des DMB-Codierers 230a und des Zugangsbeschränkungs-Hinzufügers 230c auch kombiniert sein. So kommt es im Wesentlichen darauf an, dass der Transportstrom-Bereitsteller 230 einen MPEG2-Transportstrom 232 liefert, wie er anhand der Fig. 1 kurz erläutert wurde und wie er im Folgenden noch detailliert erläutert wird.

Der DAB-Signal-Bereitsteller 200 umfasst ferner einen sogenannten DMB-Gateway 240, der ausgelegt ist, um den MPEG2-Transportstrom 232 zu empfangen und basierend darauf ein DAB-Unterkanal-Signal 242 (DAB-Subchannel) bereitzustellen. Der DAB-Signal-Bereitsteller 200 umfasst ferner einen DAB-Multiplexer 250, der ausgelegt ist, um das DAB-Unterkanal-Signal 242 zu empfangen und basierend darauf ein DAB-Signal 220 bereitzustellen, das beispielsweise eine Mehrzahl von DAB-Diensten im Multiplex wiedergibt bzw. beschreibt.

### 2.1.2 Transport der Zugangsbeschränkungsinformationen (CA-Informationen)

Die Informationen betreffend die Zugangsbeschränkung (auch als CA-Informationen bezeichnet), also die Angabe, welches Verschlüsselungsverfahren verwendet wird, und die Berechtigungssteuerungsnachricht (hier ECM), werden anders als bei DVB übertragen. Während der digitale Videorundfunk DVB dafür spezielle MPEG-Transportstrom-Pakete nutzt, werden die CA-Informationen bei dem erfindungsgemäßen Konzept in MPEG-Transportstrom-Pakete eingebettet, die bei dem digitalen Multimedia-Rundfunk DMB-Prinzip-bedingt häufig übertragen werden, aber nur zum Teil genutzt sind und daher die CA-Informationen noch mit aufnehmen können. Es handelt sich hierbei bevorzugt um die Pakete, die die Programmzuordnungstabelle PAT ("program association table") enthalten. Diese Tabelle PAT wird bei dem digitalen Multimedia-Rundfunk DMB standardmäßig mindestens alle 500 Millisekunden übertragen (vgl. ETSI TS 102 428, V1.2.1, Abschnitt 6.2) und belegt prinzipbedingt ein komplettes MPEG-Transportstrom-Paket, obwohl diese Tabelle selber recht klein (z. B. nur 18 Bytes groß) ist. Der Rest des Pakets, das beispielsweise 188 Bytes brutto groß ist (vgl. ISO/IEC 13818-1: 2007 (E), Abschnitt 2.4.3), bleibt ungenutzt.

Diese Programmzuordnungstabelle PAT beschreibt alle im MPEG-Transportstrom enthaltenen Programme. Da der digitale Multimedia-Rundfunk per Definition nur ein Programm pro MPEG-Transportstrom, der in einem DAB-Unterkanal bzw. DAB-Subchannel übertragen wird, enthält (im Gegensatz zu DVB, bei dem mehrere Programme in einem MPEG-Transportstrom enthalten sein können), ist diese Tabelle immer sehr kurz. Für Details diesbezüglich sei auf die Referenz [3], Kapitel 6.2 verwiesen, wo darauf hingewiesen wird, dass eine Programmzuordnungstabelle PAT immer ein Programm beschreiben soll.

Die CA-Informationen werden, wie bei MPEG üblich, über so genannte CA-Deskriptoren ("CA descriptors") codiert. Es ist damit auch möglich, Simulcrypt zu verwenden. Ein oder mehrere CA-Deskriptoren, die auch jeweils eine oder mehrere Berechtigungsschlüsselnachrichten ECM enthalten können, werden dabei jeweils in ein PAT-Paket (also in einem Transportstrom-Paket, das eine Programmzuordnungstabelle PAT enthält) mit eingebettet (beispielsweise in einer Tabelle "CA_ECM_section", die unten noch detaillierter beschrieben wird, oder in einer Tabelle "CA_section", die unten noch näher beschrieben wird). Das bedeutet also, dass die eigentlich übertragenen CA-Informationen bei einigen Ausführungsbeispielen ähnlich oder sogar identisch zu den bei DVB übertragenen CA-Informationen sind. Allerdings werden die Daten (beispielsweise die Daten der CA-Informationen) erfindungsgemäß an anderer Stelle eingebettet, und zwar beispielsweise ebenfalls in den PAT-Paketen (beispielsweise in den Tabellen "CA_section" und "CA_ECM_section" und/oder in den unten näher beschriebenen Tabellen "CA_data", die ebenfalls in den PAT-Paketen enthalten sind).

Die Einbettung erfolgt dabei entsprechend der im DMB-Standard vorgesehenen Einbettung von sogenannten PAD-Daten. Dabei wird ausgenutzt, dass in ein MPEG-Transportstrom-Paket auch proprietäre (private) Daten, in dem vorliegenden Fall die CA-Informationen, eingebettet werden können. Dazu dient das Feld "transport_private_data" (ein Merker, der den Transport von privaten Daten anzeigt) innerhalb des sogenannten Anpassungsfeldes "adaptation_field()" im Nachrichtenkopf des Transportstrom-Pakets. Das so genannte Anpassungsfeld "adaptation_field()" stellt dabei ein Anpassungsfeld dar, das die Übertragung von Zusatzinformationen in dem Nachrichtenkopf eines Transportstrom-Pakets ermöglicht, wobei die Zusatzinformationen unter anderem so genannte "private" Daten umfassen können, deren Inhalt nicht in den entsprechenden Standards spezifiziert ist.

Die Einbettung der CA-Informationen ist aber nicht auf die Programmzuordnungstabelle PAT (bzw. das Transportstrom-Paket, das die Programmzuordnungstabelle PAT enthält) beschränkt, sondern CA-Informationen können im Prinzip in jedes MPEG-Transportstrom-Paket eingebettet werden, das genügend freien Platz enthält. Da üblicherweise aber ein DMB-Codierer ("DMB-Encoder") alle MPEG-Transportstrom-Pakete (bzw. zumindest MPEG-Transportstrom-Nutzdaten-Pakete) mit Nutzdaten füllen wird, um die volle Datenrate auch zu nutzen, werden üblicherweise die meisten MPEG-Transportstrom-Paket (bzw. zumindest die meisten MPEG-Transportstrom-Nutzdaten-Pakete) komplett mit Audio/Video-Daten oder Multimedia-Daten bzw. Signalisierung gefüllt sein. Aus diesem Grund wird es bevorzugt, für die Einbettung der CA-Informationen im Wesentlichen bzw. sogar ausschließlich diejenigen MPEG-Transportstrom-Pakete heranzuziehen, die die Programmzuordnungstabelle (PAT) enthalten, da diese für eine standardgerechte Einbettung von codierten Audiodaten und/oder codierten Videodaten mangels einen entsprechenden Datenfeldes ohnehin nicht geeignet sind.

Im Folgenden wird das Konzept zur Einbettung von CA-Informationen in dem Nachrichtenkopf ("Header") eines Transportstrom-Pakets beschrieben. Da die entsprechende Einbettung einige Ähnlichkeiten mit Einbettungen von sogenannten PAD-Daten aufweist, wird hier kurz der Vergleich gemacht. Bei der PAD-Einbettung, die beispielsweise in Referenz [3], Kapitel 9 beschrieben ist, werden im sogenannten "transport_private_data"-Feld ("Transport-von-privaten-Daten-Feld") der PAT-Pakete (also der Transportstrom-Pakete mit einer Programmzuordnungstabelle PAT) die PAD-Daten eingebettet. Das erste Byte des "transport_private_data"-Feld, das typischerweise eine Mehrzahl von Bytes umfasst, trägt dabei einen Identifizierer, der beschreibt, welche Daten in dieses Feld eingebettet werden. Während dieser Wert (bzw. der Wert in dem ersten Byte des "transport_private data"-Feldes) für PAD-Daten 0 ist, sollte dieser Wert für CA-Informationen einen anderen Wert haben. Der Parameter "transport_private_data_length" im Transportstrom-Paket-Nachrichtenkopf signalisiert entsprechend die Länge des Feldes mit den CA-Informationen plus 1 Byte (wobei die 1 bzw. das zusätzliche Byte der Länge des Feldes mit dem Identifizierer entspricht). Die Einbettung der CA-Informationen entspricht also, zumindest in mancherlei Hinsicht, der Einbettung von PAD-Daten. Bei manchen Ausführungsbeispielen unterscheidet (bzw. sollte unterscheiden) immer der Identifizierer die beiden Arten von Daten.

Im Folgenden wird kurz auf die übertragbare Datenrate eingegangen. Die Programmzuordnungstabelle PAT wird mindestens alle 500 Millisekunden übertragen. Falls pro PAT-Paket, also pro Transportstrom-Paket, das eine Programmzuordnungstabelle PAT enthält, beispielsweise 150 Bytes für CA-Informationen genutzt würden, dann ergäbe sich daraus eine Datenrate von 300 Bytes pro Sekunde bzw. 2.400 Bit pro Sekunde (bps) für die CA-Informationen.

Diese Datenrate erhöht sich gegebenenfalls, sofern auch andere Pakete genutzt würden. Im Prinzip wäre es auch nach wie vor möglich, dass der DMB-Codierer ("DMB-Encoder") ab und an komplette MPEG-Transportstrom-Pakete ungenutzt lässt (also so genannte "Null packets" bzw. "Null-Pakete" einfügt). Dies könnte entweder bei der Konfiguration des DMB-Codierers festgelegt worden sein oder aber auftreten, wenn ein Datenstrom dynamischer Datenrate (z. B. so genannte BIFS-Multimediadaten), beispielsweise kurzzeitig, nicht die vorkonfigurierte Datenrate nutzt. Diese (vom Standpunkt des DMB-Codierers) "Füll"-(englisch: "Padding" oder "Null") Pakete können optional ebenfalls für CA-Informationen genutzt werden und damit die Datenrate für die CA-Informationen erhöhen.

Das erfindungsgemäße Verfahren, CA-Informationen zumindest teilweise, alternativ dazu aber auch ausschließlich, in PAT-Pakete einzubetten, hat aber den Vorteil, dass die CA-Informationen selbst dann eingebettet werden können, wenn der DMB-Codierer die komplette zur Verfügung stehende Datenrate nutzt, also keine "Füll"- (englisch: "Padding" bzw. "Null") Pakete einbaut.

Um das Einbetten der CA-Informationen sowie die Verschlüsselung der MPEG-Transportstrom-Pakete zu vereinfachen, wird erfindungsgemäß bevorzugt (ist aber nicht notwendigerweise erforderlich), nur die PAT-Pakete für das Einbetten der CA-Informationen zu nutzen. Die PAT-Pakete sind deswegen am besten geeignet, weil sie leicht anhand ihres Pakettyp-Identifizierers (PID) identifiziert werden können. So ist nämlich der Pakettyp-Identifizierer für die PAT-Pakete immer gleich 0 (dieser Wert wird also gerade nicht durch andere Transportstrom-Pakete definiert). Die PAT-Pakete sind außerdem am besten für das Einbetten der CA-Informationen geeignet, weil sie oft genug übertragen werden, und zwar gemäß der Referenz [3] mindestens alle 500 Millisekunden, typischerweise öfter. Die PAT-Pakete eignen sich außerdem gut für das Einbetten der CA-Informationen, weil sie zuverlässig freie Datenkapazitäten aufweisen, insbesondere bei DMB. Die PAT-Pakete eignen sich außerdem gut für das Einbetten der CA-Informationen, weil die Decodierung des MPEG-Datenstroms immer mit der Programmzuordnungstabelle PAT beginnt und damit die CA-Informationen auch dann bereits mit dem Empfang eines PAT-Pakets zur Verfügung stehen. Letzteres stellt auch sicher, dass trotz Verschlüsselung die Abstimmzeit (auch als "Tune-in"-Zeit bezeichnet) unverändert bleiben kann, zumindest sofern der CA-Decodierer (Decodierer für die Zugangsbeschränkungsinformationen) auf Empfangsseite keine zusätzliche Verzögerung erzwingt.

Optional wäre es möglich, auch "Füll"- (englisch: "Padding" bzw. "Null") Pakete für die Einbettung der CA-Informationen zu nutzen, da diese ebenfalls leicht anhand ihrer Pakettyp-Identifizierer (PID) identifiziert werden können (PID = = 0x1 FFF). Ebenso können optional PMT Pakete genutzt werden, da diese typischerweise freie Datenkapazitäten aufweisen und typischerweise direkt auf PAT Pakete folgen. Letzteres stellt auch sicher, dass trotz Verschlüsselung die Abstimmzeit (auch als "Tune-in"-Zeit bezeichnet) unverändert bleiben kann.

Allerdings könnten "Füll"- (englisch: "Padding" bzw. "Null") Pakete natürlich optional auch direkt als Pakete mit CA-Informationen signalisiert werden, also die Pakettyp-Identifizierer (PID) entsprechend angepasst werden. Dies gilt allerdings typischerweise nicht für Pakete mit einer Programmabbildungstabelle (PMT).

Wenn also immer genügend Füllpakete ("Padding" bzw. Null") zur Verfügung stehen, so wäre das erfindungsgemäße Verfahren nicht nötig und man könnte direkt die Verschlüsselung entsprechend DVB nutzen. Da allerdings in den meisten Fällen gerade nicht sichergestellt ist, dass immer genügend Füllpakete zur Verfügung stehen, die für eine CA-Information nutzbar sind, bringt das erfindungsgemäße Konzept, CA-Informationen in die PAT-Pakete einzubetten, ganz erhebliche Vorteile gegenüber dem genannten vereinfachten Konzept der Übertragung der CA-Information, da sich die Datenrate des Stroms nicht erhöht.

Im Folgenden werden einige optionale Verbesserungen beschrieben, die bei manchen Ausführungsbeispielen gemäß der Erfindung implementiert sein können.

Falls in einem DAB-Ensemble mehrere DMB-Programme verschlüsselt werden, dann ist es sinnvoll, alle Berechtigungsverwaltungsnachrichten EMM in einem einzigen Kanal zu übertragen und damit alle Dienste-Freischaltungen und Dienste-Verlängerungen für alle verschlüsselten Programme des DAB-Ensembles in einem getrennten Kanal zu übertragen. In diesem Fall sind innerhalb des verschlüsselten DMB-Datenstroms im Wesentlichen nur noch Berechtigungssteuernachrichten (ECM) zu übertragen. Daher bietet die Einbettung in die PAT-Pakete bereits eine ausreichende Datenrate für die CA-Informationen (Beschreibung der verwendeten Verfahren sowie der Berechtigungssteuernachrichten ECM). Pakete mit Programmzuordnungstabelle PAT können sehr einfach identifiziert werden, da der Parameter PID (Programmidentifikation bzw. "program identification"), der hier auch als Pakettyp-Identifizierer bezeichnet wird, am Beginn jedes MPEG-Transportstrom-Pakets den festen Wert 0 hat (sofern es sich um ein PAT-Paket handelt).

Im Folgenden wird kurz erläutert, wie der Master-Kanal (also ein getrennter Kanal mit EMM-Informationen) signalisiert und an dem Empfänger-Gerät erkannt wird. Ein eindeutiger Zugriff, entweder auf einem vordefinierten festen Kanal bzw. einem Kanal, der eindeutig als solcher identifiziert werden kann, kann z. B. auf die folgende Weise ermöglicht werden:
- 1.: Es kann ein fester Unterkanal (z. B. Unterkanal 63) ohne eine weitere Signalisierung verwendet werden;
- 2.: Es kann ein festes Dienste-Etikett verwendet werden, z. B. "EMM.CAS". Empfänger suchen dann nach einem Dienst mit diesem Namen und nutzen ihn gegebenenfalls (zum Beispiel für den Empfang von EMM).
- 3.: Ein Benutzer-Anwendungs-Identifizierer kann im proprietären Bereich übertragen werden. Dann könnte der Dienst (der die Übertragung der EMMs ermöglicht) ein beliebiges Etikett haben, wäre aber immer noch auf den Empfängern ohne Zugangsbeschränkung ("Nicht-CA-Empfängern") sichtbar;
- 4.: Der Master-Kanal wird als sekundäre Dienste-Komponente ("secondary service component") an den DMB-Dienst "geklebt", und der Benutzer-Anwendungs-Identifizierer ("UserApplicationId") sagt aus, dass es EMMs sind. Eine solche Lösung hat mehrere Vorteile. Der Empfänger sucht also nach DMB. Dies muss die primäre Dienste-Komponente sein. Falls es (mindestens) eine sekundäre Dienste-Komponente gibt und diese den noch festzulegenden EMM-Nutzer-Anwendungs-Identifizierer (UserApplicationId) verwendet, dann sind dort die EMMs zu finden.

Details im Hinblick auf eine beispielhafte Codierung der CA-Informationen werden im Folgenden noch näher erläutert.

Es sei im Übrigen darauf hingewiesen, dass der Transportstrom-Bereitsteller 230 ausgelegt sein kann, um den MPEG2-Transportstrom 232 derart bereitzustellen, dass dieser eine oder alle der oben erläuterten Eigenschaften aufweist.

### 2.2 DAB-Signal-Bereitsteller gemäß Fig. 2B

Im Folgenden wird noch ein DAB-Signal-Bereitsteller 270 gemäß Fig. 2B kurz erläutert. Der DAB-Signal-Bereitsteller 270 ist ausgelegt, um eine digitale Medieninformation 272 zu empfangen, die beispielsweise der digitalen Medieninformation 210 entsprechen kann. Der DAB-Signal-Bereitsteller 270 ist ferner ausgelegt, um ein DAB-Signal 274 bereitzustellen, das beispielsweise dem DAB-Signal 220 entsprechen kann. Der DAB-Signal-Bereitsteller 270 umfasst einen Transportstrom-Bereitsteller 276, der ausgelegt ist, um die digitale Medieninformation 272 zu empfangen und basierend darauf einen zumindest teilweise verschlüsselten Transportstrom 280 bereitzustellen.

Der DAB-Signalbereitsteller 270 umfasst ferner einen DAB-Dienste-Kombinierer 290, der ausgelegt ist, um den durch den Transportstrombereitsteller 276 bereitgestellten MPEG-2-Transportstrom 280 mit einem oder mehreren anderen DAB-Diensten 292 zu kombinieren, um das DAB-Signal 274 zu erhalten.

Der Transportstrom-Bereitsteller 276 ist beispielsweise ausgelegt, um ein Transportstrom-Paket 282 eines ersten Pakettyps bereitzustellen, das eine Programmzuordnungstabelle PAT und eine Zugangsbeschränkungsinformation mit Schlüsselinformationen ECM umfasst. Der Transportstrom-Bereitsteller 276 ist ferner ausgelegt, um Transportstrom-Pakete eines zweiten Pakettyps bereitzustellen, die einen Verweis auf Pakettyp-Identifizierer von Transportstrom-Nutzdaten-Paketen enthalten. Der Transportstrom-Bereitsteller ist ferner ausgelegt, um Transportstrom-Pakete 286 eines ersten weiteren Pakettyps (beispielsweise eines dritten Pakettyps) bereitzustellen, die einen Inhalt eines ersten Medientyps der digitalen Medieninformation 272 (z. B. Audio) beschreiben, und um Transportstrom-Pakete 288 eines zweiten weiteren Pakettyps (beispielsweise eines vierten Pakettyps) bereitzustellen, die einen Inhalt eines zweiten Medientyps der digitalen Medieninformation 272 (z. B. Video) beschreiben. Der Transportstrom-Bereitsteller 276 ist dabei ausgelegt, um den Transportstrom 280 so bereitzustellen, dass ein Inhalt zumindest einiger der Transportstrom-Pakete des ersten weiteren Pakettyps (zum Beispiel des dritten Pakettyps) verschlüsselt ist, oder so dass ein Inhalt zumindest einiger der Transportstrom-Pakete des zweiten weiteren Pakettyps (zum Beispiel des vierten Pakettyps) verschlüsselt ist. Im Übrigen ist der Transportstrom-Bereitsteller 276 ausgelegt, um die Zugangsbeschränkungsinformation, die in den Transportstrom-Paketen 282 des ersten Pakettyps enthalten ist, so bereitzustellen, dass diese eine Schlüsselinformation zum Entschlüsseln der verschlüsselten Inhalte der Transportstrom-Pakete 286 des ersten weiteren Pakettyps (zum Beispiel des dritten Pakettyps) oder der verschlüsselten Inhalte der Transportstrom-Pakete 288 des zweiten weiteren Pakettyps (zum Beispiel des vierten Pakettyps) umfasst. Somit sind zumindest einige Inhalte des MPEG-2 Transportstroms 280 durch eine entsprechende Inhaltsverschlüsselung gegen einen unberechtigten Zugang bzw. Zugriff geschützt. Die zum Entschlüsseln nötige Schlüsselinformation wird dabei durch den Transportstrom-Bereitsteller 276 in die Transportstrom-Pakete 282 des ersten Pakettyps eingebettet. Ob der Transportstrom-Bereitsteller 276 im übrigen die verschlüsselten Inhalte der Transportstrom-Pakete des ersten weiteren Pakettyps (zum Beispiel des dritten Pakettyps) bzw. des zweiten weiteren Pakettyps (zum Beispiel des vierten Pakettyps) selbst verschlüsselt oder bereits eine zumindest teilweise verschlüsselte digitale Medieninformation 272 erhält, ist dabei von untergeordneter Bedeutung, wobei beide Alternativlösungen einsetzbar sind.

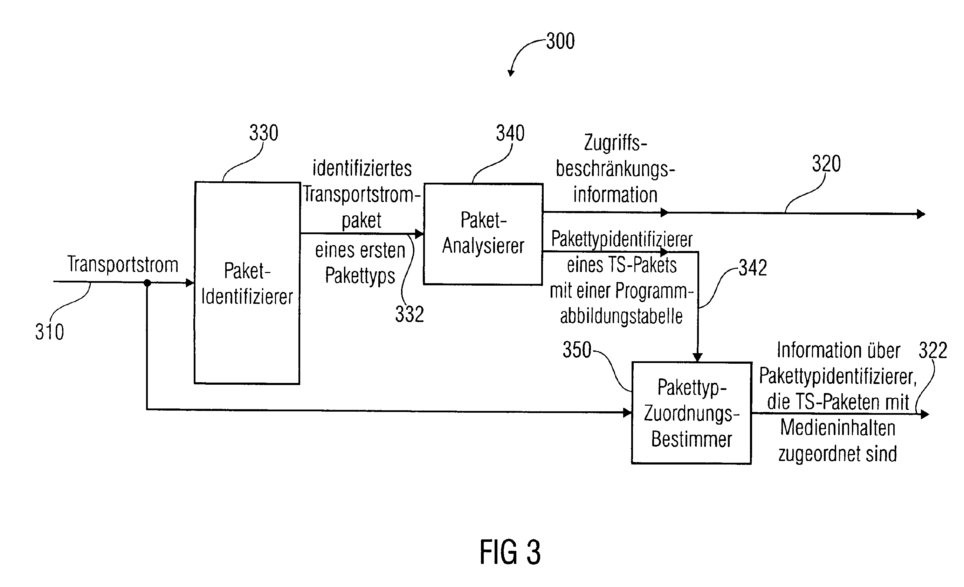

### 3. Transportstrom-Analysierer gemäß Fig. 3

Im Folgenden wird ein Transportstrom-Analysierer 300 gemäß einem Ausführungsbeispiel der vorliegenden Erfindung Bezug nehmend auf die Fig. 3 beschrieben, die ein Blockschaltbild eines derartigen Transportstrom-Analysierers 300 zeigt. Der Transportstrom-Analysierer 300 ist ausgelegt, um einen Transportstrom 310 zu empfangen und basierend darauf sowohl eine Zugangsbeschränkungsinformation 320 als auch eine Information 322 über Paket-Identifizierer, die Transportstrom-Paketen mit Medieninhalten zugeordnet sind, zu liefern. Der Transportstrom-Analysierer 300 umfasst einen Paket-Identifizierer 330, der ausgelegt ist, um ein Paket 332 eines vorgegebenen ersten Pakettyps, das einen vorgegebenen ersten Pakettyp-Identifizierer aufweist, und das eine Programmzuordnungstabelle PAT enthält, als ein identifiziertes Paket zu identifizieren. Der Transportstrom-Analysierer 300 umfasst ferner einen Paket-Analysierer, der ausgelegt ist, um das identifizierte Transportstrom-Paket 332 des ersten Pakettyps nach einer Zugangsbeschränkungsinformation zu durchzusuchen und die gefundene Zugangsbeschränkungsinformation 320 bereitzustellen. Der Paket-Analysierer 340 ist bevorzugt ferner ausgelegt, um die Programmzuordnungstabelle in dem identifizierten Transportstrom-Paket 332 des vorgegebenen ersten Pakettyps auszuwerten und basierend auf der Programmzuordnungstabelle PAT einen zweiten Pakettyp-Identifizierer 342 zu bestimmen, der einem Transportstrom-Paket mit einer Programmabbildungstabelle zugeordnet ist. Der Transportstrom-Analysierer umfasst einen Pakettyp-Zuordnungs-Bestimmer 350, der ausgelegt ist, um basierend auf dem bestimmten zweiten Pakettyp-Identifizierer 342 ein Transportstrom-Paket mit einer Programmabbildungstabelle in dem Transportstrom zu identifizieren und die Programmabbildungstabelle auszuwerten, um eine Information 322 darüber zu erhalten, welche Pakettyp-Identifizierer Transportstrom-Paketen zugeordnet sind, die Medieninhalte der zugangsbeschränkten digitalen Medieninformation enthalten.

Der Transportstrom-Analysierer 300 ist somit ausgelegt, um aus einem Transportstrom 120, 232, 280 diejenige Information zu extrahieren, die erforderlich ist, um die codierten und zumindest teilweise verschlüsselten Medieninhalte der digitalen Medieninformation 110, 210, 272 wiederzugewinnen. Zu diesem Zweck analysiert der Transportstrom-Analysierer 300 in effizienter Weise genau diejenigen Transportstrom-Pakete, in die die relevante Information eingebettet ist. Durch eine Identifizierung und Analyse der Transportstrom-Pakete des ersten Pakettyps erhält der Transportstrom-Analysierer 300 in sehr rascher und effizienter Weise die Zugangsbeschränkungsinformation 320, so dass durch die Wiedergewinnung der Zugangsbeschränkungsinformation keine unnötige Verzögerung bei der Auswertung des Transportstroms 310 entsteht. Außerdem nutzt der Transportstrom-Analysierer 300 die Tatsache aus, dass in den Transportstrom-Paketen des ersten Pakettyps ohnehin typischerweise eine Bit-Kapazität zur Einbettung der Zugangsbeschränkungsinformation 320 zur Verfügung steht, die bei alternativen Konzepten ungenutzt bliebe. Außerdem ist bei dem Transportstrom-Analysierer 300 die Wiedergewinnung der Zugangsbeschränkungsinformation unabhängig von den Transportstrom-Nutzdaten-Paketen, so dass diese Transportstrom-Nutzdaten-Pakete (von einem weiteren Pakettyp bzw. von mehreren weiteren Pakettypen, zum Beispiel von dem dritten Pakettyp bzw. von dem vierten Pakettyp) für die Gewinnung der Zugangsbeschränkungsinformation 320 nicht durchsucht werden müssen. In einigen Ausführungsbeispielen gibt es als weitere Pakettypen nur Audio oder Video. In anderen Ausführungsbeispielen werden zudem auch noch andere weitere Pakettypen verwendet, beispielsweise für die Übertragung von Multimedia-Informationen.

Optional kann im übrigen der Transportstrom-Analysierer 300 einen Entschlüsseler aufweisen, der ausgelegt ist, um verschlüsselte Medieninhalte, die in Transportstrom-Paketen mit in der Programmabbildungstabelle beschriebenen Pakettyp-Identifizierern enthalten sind, unter Verwendung der in dem Transportstrom-Paket des vorgegebenen ersten Pakettyps enthaltenen Zugangsbeschränkungsinformationen zu entschlüsseln. In anderen Worten, es können aus dem Transportstrom 310 solche Transportstrom-Pakete herausgefiltert werden, deren Pakettyp-Identifizierer durch die Information 322 beschrieben wird. Für die Entschlüsselung dieser herausgefilterten Pakete kann dann die Zugangsbeschränkungsinformation 320 herangezogen werden, die z. B. eine Schlüsselinformation umfasst. Die Schlüsselinformation kann dabei beispielsweise in verschlüsselter Form vorliegen, so dass der Transportstrom-Analysierer 300 diese aufgrund seiner Kenntnis eines Geheimnisses (z. B. eines geheimen Schlüssels) entschlüsseln kann.

Bei einem weiteren Ausführungsbeispiel kann der Transportstrom-Analysierer 300 ausgelegt sein, um das identifizierte Transportstrom-Paket 332 des vorgegebenen ersten Pakettyps daraufhin zu untersuchen, ob ein Zusatzinformationsfeld eine oder mehrere Tabellen aufweist, die durch vorgegebene Tabellen-Identifizierer gekennzeichnet sind und eine Zugangsbeschränkungsinformation enthalten. Der Transportstrom-Analysierer 300 kann daraufhin die in identifizierten Tabellen enthaltenen Zugangsbeschränkungsinformationen bereitstellen. Die entsprechende Funktionalität kann beispielsweise durch den Paket-Analysierer 340 wahrgenommen werden. Bevorzugt ist der Paket-Analysierer 340 ausgelegt, um ansprechend auf ein Auffinden der ersten Tabelle, die durch einen ersten vorgegebenen Tabellen-Identifizierer gekennzeichnet ist und eine Zugangsbeschränkungsinformation enthält, und abhängig von einer in der ersten Tabelle enthaltenen Tabellenlängeinformation zu überprüfen, ob das Zusatzinformationsfeld des identifizierten Transportstrom-Pakets 332 des vorgegebenen ersten Paketstyps anschließend an die erste Tabelle eine weitere Tabelle aufweist, die eine Zugangsbeschränkungsinformation enthält. Wird eine solche weitere Tabelle identifiziert, so wird die in der weiteren Tabelle enthaltene Zugangsbeschränkungsinformation durch den Paket-Analysierer 340 bereitgestellt. Durch die entsprechende Ausgestaltung ist der Paket-Analysierer 340 in der Lage, eine umfangreiche Zugangsbeschränkungsinformation auszuwerten, die auf mehrere Tabellen aufgeteilt ist, wie diese im Folgenden noch detaillierter erläutert wird. Insofern ist der Transportstrom-Analysierer 300 in der Lage, aus einem Zusatzinformationsfeld eines einzigen Transportstrom-Pakets verschiedene Arten von Zugangsbeschränkungsinformationen zu extrahieren, was wiederum eine Codierung einer komplexen Zugangsbeschränkungsinformation innerhalb eines einzigen Transportstrom-Pakets ermöglicht.

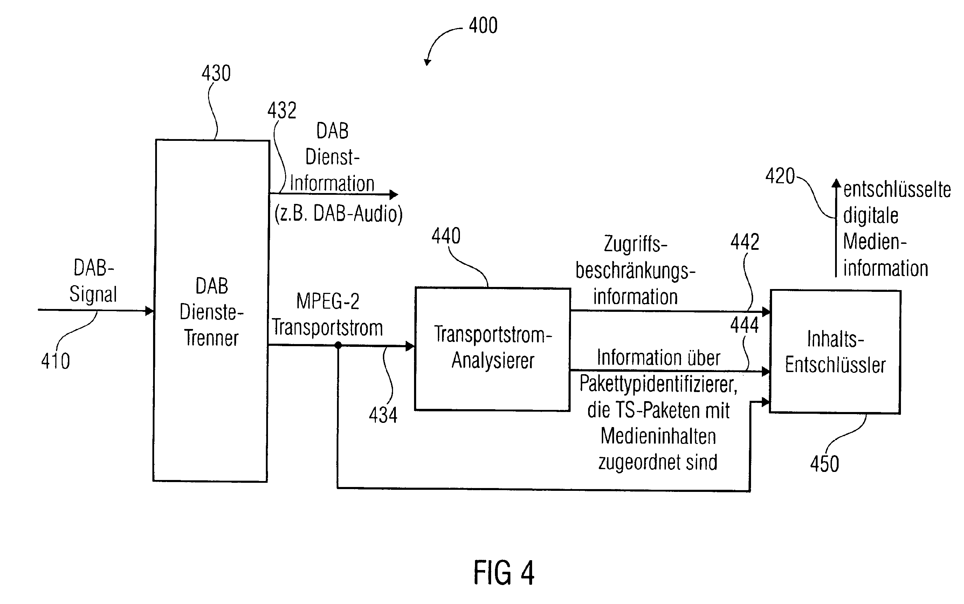

### 4. DAB-Empfänger gemäß Fig. 4

Im Folgenden wird noch ein DAB-Empfänger gemäß Fig. 4 beschrieben. Fig. 4 zeigt ein Blockschaltbild eines derartigen Empfängers 400. Der DAB-Empfänger ist ausgelegt, um ein DAB-Signal 410 zu empfangen, das bevorzugt eine zumindest teilweise verschlüsselte digitale Medieninformation (bevorzugt sogar eine Multimediainformation) umfasst, und basierend darauf eine entschlüsselte digitale Medieninformation (oder sogar eine entschlüsselte digitale Multimediainformation) 420 bereitzustellen. Der DAB-Empfänger 400 umfasst einen DAB-Dienste-Trenner 430, der ausgelegt ist, um das DAB-Signal 410 zu empfangen und basierend darauf eine DAB-Dienstinformation 432, die beispielsweise eine DAB-Audio-Information umfasst, sowie einen MPEG-2- Transportstrom 434 bereitzustellen. Der DAB-Empfänger umfasst ferner einen Transportstrom-Analysierer 440, der beispielsweise dem anhand der Fig. 3 beschriebenen Transportstrom-Analysierer 300 entspricht. Der Transportstrom-Analysierer 440 ist ausgelegt, um den MPEG-2 Transportstrom 434 von dem DAB-Dienstetrenner 430 zu empfangen und die Zugangsbeschränkungsinformation 442 zum Entschlüsseln der zugangsbeschränkten digitalen Medieninformation auf der Basis des MPEG-2 Transportstroms 434 bereitzustellen. Der DAB-Empfänger 400 umfasst ferner einen Inhalts-Entschlüsseler 450, der ausgelegt ist, um verschlüsselte Medieninhalte der zugangsbeschränkten digitalen Medieninformation unter Verwendung der Zugangsbeschränkungsinformation 442 zu entschlüsseln und somit die entschlüsselte digitale Medieninformation 442 zu erhalten.

Der Inhalts-Entschlüsseler 450 kann beispielsweise ausgelegt sein, um zu entschlüsselnde Pakete in Abhängigkeit von einer Information 444 über Pakettyp-Identifizierer, die Transportstrom-Paketen mit Medieninhalten zugeordnet sind, und die durch den Transportstrom-Analysierer 440 geliefert wird, auszuwählen bzw. aus dem MPEG-2 Transportstrom 434 zu extrahieren.

Somit kann der DAB-Empfänger 400 in effizienter Weise eine entschlüsselte digitale Medieninformation 420 aus dem DAB-Signal 410 gewinnen, wobei der DAB-Empfänger 400 das erfindungsgemäße Konzept zur Einbettung von Zugangsbeschränkungsinformationen in Transportstrom-Paketen mit einer Programmzuordnungstabelle PAT ausnutzt, um möglichst schnell und bei geringem Ressourcen-Überhang die Zugangsbeschränkungsinformationen 442 zu erhalten.

### 5. Struktur des Transportstroms und Codierung der CA-Informationen

Im Folgenden wird die Struktur des Transportstroms sowie die Codierung der CA-Informationen detailliert erläutert. Diesbezüglich sollte berücksichtigt werden, dass der Transportstrom-Bereitsteller 100 bzw. der DAB-Signal-Bereitsteller 200 ausgelegt ist, um einen Transportstrom der im Folgenden beschriebenen Struktur bereitzustellen. Im Übrigen ist der Transportstrom-Analysierer gemäß der Fig. 3 bzw. der DAB-Empfänger gemäß der Fig. 4 ausgelegt, einen entsprechenden Transportstrom auszuwerten.

### 5.1. Transportstrom gemäß den Fig. 5a und 5b

Fig. 5a zeigt eine schematische Darstellung eines Transportstroms, bei dem es sich beispielsweise um einen MPEG-2 Transportstrom handelt. Der MPEG-2 Transportstrom 500 umfasst eine Folge von Transportstrom-Paketen 510, 520, 530, die auch kurz als "TS packet" bezeichnet sind und denen unterschiedliche Pakettyp-Identifizierer zugeordnet sind. Es sei hier allerdings darauf hingewiesen, dass natürlich typischerweise immer wieder Transportstrom-Pakete desselben Pakettyps bzw. mit demselben Pakettyp-Identifizierer auftreten.

Fig. 5b zeigt eine Syntax-Beschreibung eines MPEG- Transportstroms. Eine kontinuierliche Folge von Transportstrom-Paketen ("transport_packet") ist daran ersichtlich, dass am Beginn eines jeden Transportstrom-Pakets eine Synchronisations-Bitfolge, beispielsweise in Form eines Synchronisations-Bytes, auftritt. Details im Hinblick auf die Syntax eines MPEG- Transportstroms sind beispielsweise in ISO/IEC 13818-1 definiert, so dass für Details darauf versehen wird.

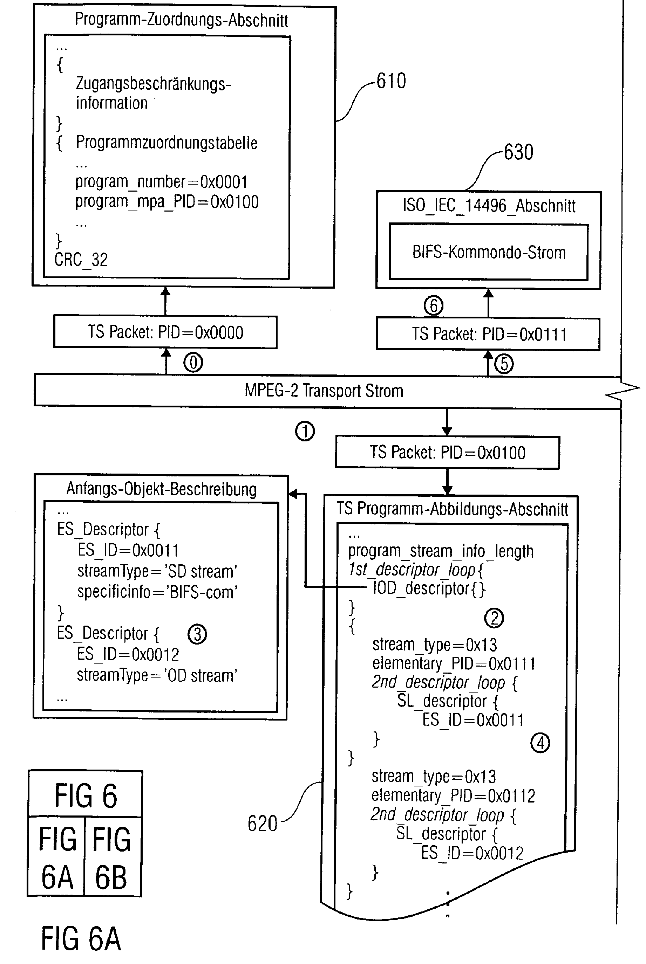

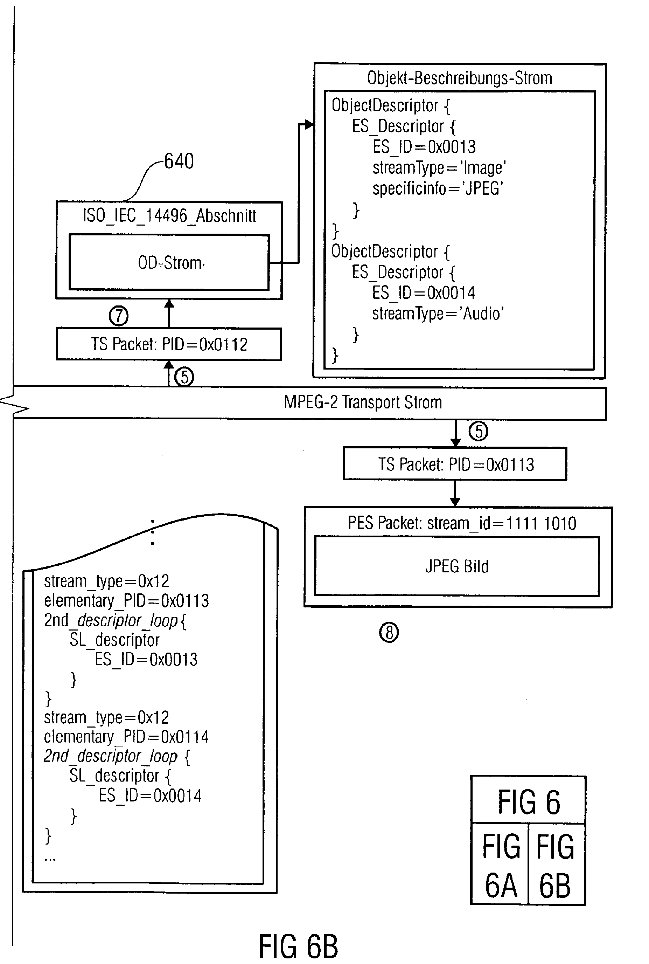

### 5.2. Übersicht über verschiedene Typen von Transportstrom-Paketen gemäß Fig. 6

Fig. 6 zeigt eine schematische Darstellung von verschiedenen Pakettypen, die in einem Multimedia-MPEG-2-Transportstrom gemäß der vorliegenden Erfindung enthalten sind. Die Pakettypen, die in der Fig. 6 gezeigt sind, eignen sich beispielsweise für eine Übertragung einer Multimedia-Information unter Verwendung eines Datenstrom-Modus des DAB-Übertragungskonzepts. Details im Hinblick auf die Transportstrom- Pakettypen, die in der Fig. 6 gezeigt sind, sind im Übrigen in ETSI TS 102 428 V1.2.1 beschrieben. Hierbei wird insbesondere auf die Beschreibung in Anhang 2 der ETSI TS 102 428 V1.2.1 auf Seite 30 verwiesen. Allerdings ist der in der Fig. 6 beschriebene Datenstrom dahin gehend modifiziert, dass der Programm-Zuordnungs-Abschnitt ("program association section") zusätzlich zu der Programmzuordnungstabelle PAT auch noch die Zugangsbeschränkungsinformation umfasst.

Somit weist der MPEG- Transportstrom gemäß der Fig. 6 ein Transportstrom-Paket 610 von einem ersten Pakettyp auf, das durch einen Pakettyp-Identifizierer PID = 0x0000 gekennzeichnet ist. Die Programmzuordnungstabelle PAT des Transportstrom-Pakets 610 definiert im übrigen, dass eine Programmabbildungstabelle, die zum Programm mit der Programm Nr. 0x0001 gehört, in einen Transportstrom-Paket 620 von einem zweiten Pakettyp enthalten ist. Zu diesem Zweck umfasst die Programmzuordnungstabelle PAT des ersten Transportstrom-Pakets 610 einen Verweis auf den Pakettyp-Identifizierer 0x0100 des Transportstrom-Pakets 620 von dem zweiten Pakettyp. Die Programmabbildungstabelle in dem Transportstrom-Paket 620 umfasst unter anderem Verweise auf weitere Transportstrom-Pakete mit den Pakettyp-Identifizierern PID = 0x0111, PID = 0x0112, PID = 0x0113 und PID = 0x0114. Somit verweist die Programmzuordnungstabelle PMT des Transportstrom-Pakets 620 unter anderem auch auf Transportstrom-Pakete mit einem weiteren Pakettyp (zum Beispiel einem dritten Pakettyp), denen der Pakettyp-Identifizierer PID = 0x0113 zugeordnet ist, und die beispielsweise eine codierte Bildinformation enthalten. Ferner verweist die Programmzuordnungstabelle PMT des zweiten Transportstrom-Pakets 620 auf Transportstrom-Pakete eines weiteren Pakettyps (zum Beispiel eines vierten Pakettyps) mit zugeordnetem Pakettyp-Identifizierer PID = 0x0114, die einen Audioinhalt der Multimedia-Information beschreiben.

Zudem umfasst die Programmzuordnungstabelle PMT des zweiten Transportstrom-Pakets 620 Verweise auch auf Transportstrom-Konfigurations-Pakete 630, 640, die beispielsweise Paket-Identifizierer PID =0x0111 und PID = 0x0112 aufweisen. Für Details im Hinblick auf die Bedeutung dieser Konfigurations-Pakete 630, 640 wird auf ISO/IEC13818-1 und ISO/IEC14496-1 verwiesen. Entsprechende Details sind hier nicht von Bedeutung. Für weitergehende Informationen wird allerdings auf die genannten Standards verwiesen, die dem Fachmann gut bekannt sind.

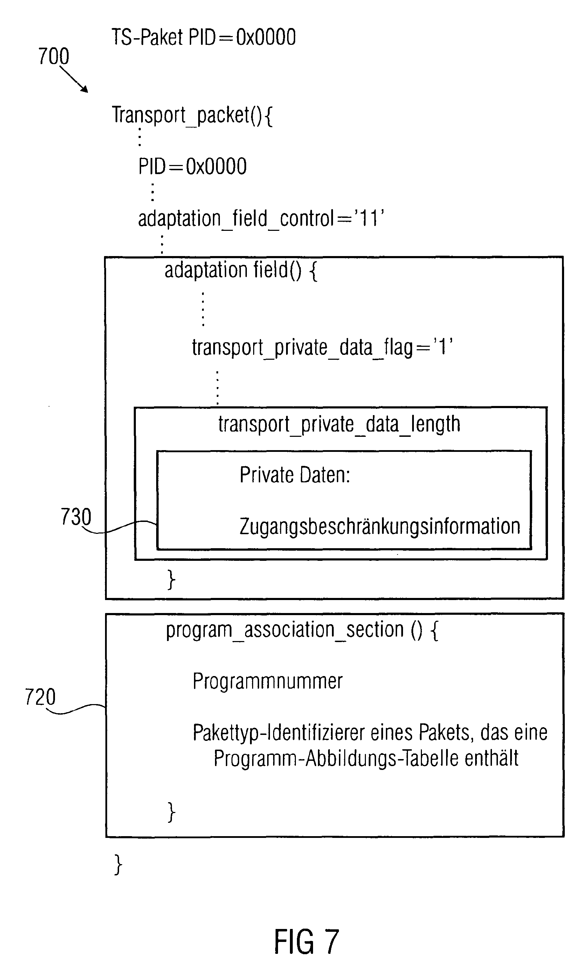

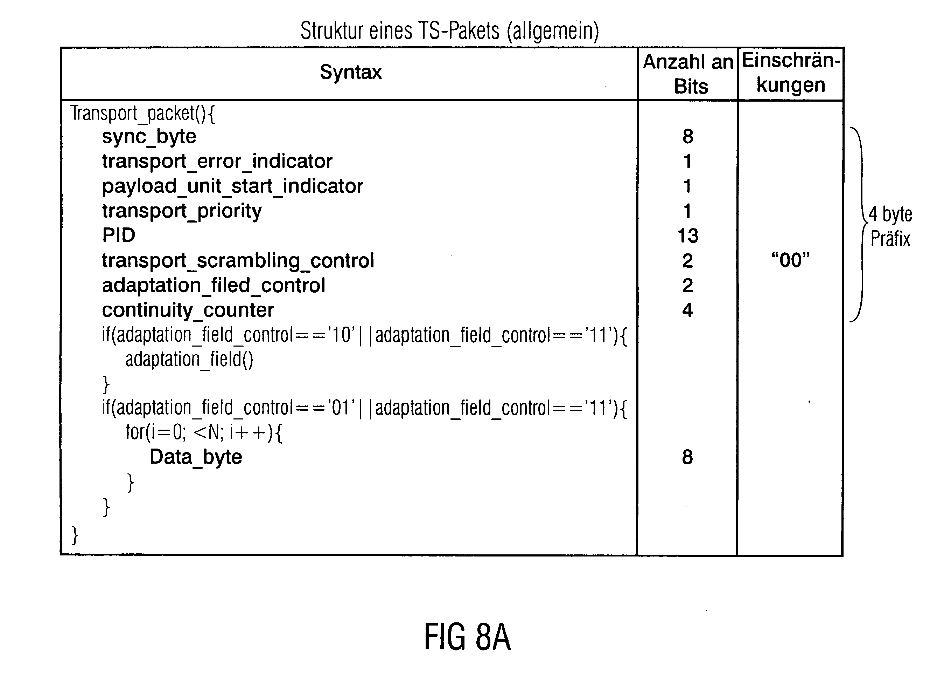

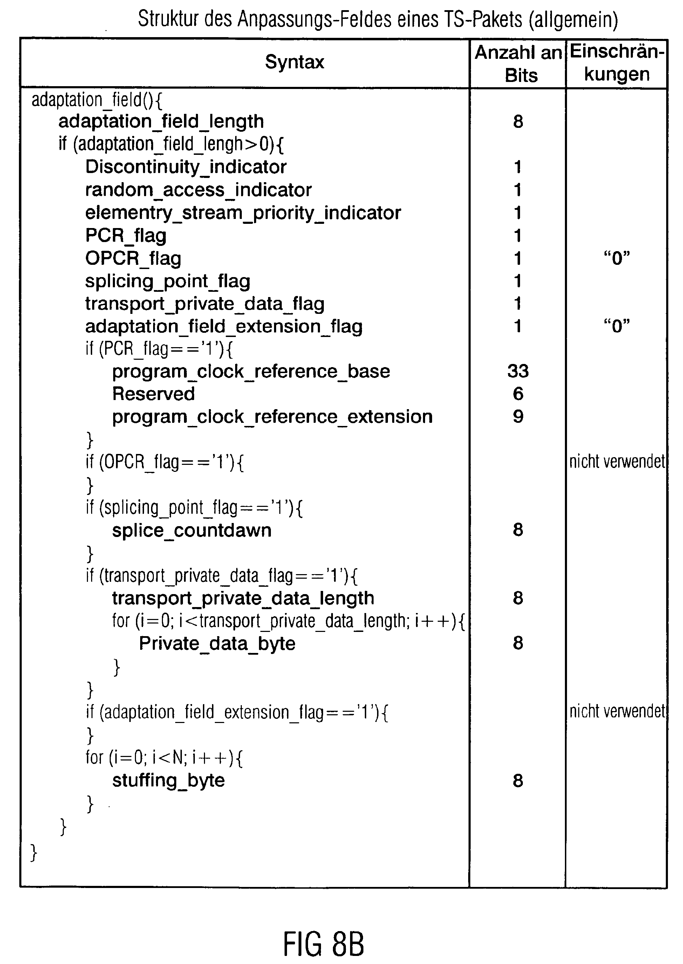

### 5.3. Struktur und Syntax des Transportstrom-Pakets vom ersten Pakettyp gemäß Fig. 7, 8a und 8b

Im Folgenden wird anhand der Fig. 7 die genaue Struktur eines Transportstrom-Pakets von dem ersten Pakettyp (PID = 0x0000) beschrieben, das sowohl die Zugangsbeschränkungsinformation als auch die Programmzuordnungstabelle PAT enthält. Das Transportstrom-Paket von dem ersten Pakettyp umfasst an einer vorbestimmten Position eines Paket-Nachrichtenkopfes (auch als "Header" oder "Präambel" bezeichnet) den Pakettyp-Identifizierer PID = 0x0000, so dass das Transportstrom-Paket von dem ersten Pakettyp mühelos auffindbar bzw. identifizierbar ist.

Das Transportstrom-Paket von dem ersten Pakettyp umfasst ferner einen 2-Bit-Merker ("adaptation_field_control"), der angibt, ob ein sogenanntes Anpassungsfeld ("adaptation_field") vorhanden ist, und um ferner anzugeben, ob eine Programm-Zuordnungs-Tabelle ("program association table", PAT) in einem Programm-Zuordnungsabschnitt ("program_association_section") vorhanden ist. Im Folgenden wird davon ausgegangen, dass sowohl das Anpassungsfeld, das als Zusatzinformationsfeld angesehen werden kann, als auch die Programm-Zuordnungs-Tabelle PAT in dem Programm-Zuordnungsabschnitt vorhanden sind.

Das Anpassungsfeld umfasst einen 1-Bit-Merker "transport_private_data_flag", der angibt, ob das Anpassungsfeld sogenannte "private Daten" umfasst, die typischerweise nicht der Standardisierung im Rahmen der ISO/IEC unterliegen. Zudem umfasst das Anpassungsfeld, zumindest bei Vorliegen von privaten Daten, eine Information "transport_private_data_length", die die Länge der privaten Daten angibt. Das Anpassungsfeld umfasst ferner die privaten Daten (auch als "private_data_byte" bzw. private Datenbytes bezeichnet), die hier eine Zugangsbeschränkungsinformation umfassen bzw. aus einer Zugangsbeschränkungsinformation bestehen. Die Zugangsbeschränkungsinformation kann dabei in einer oder mehreren Tabellen abgelegt sein, die Teil der privaten Daten sind, wie im Folgenden noch näher ausgeführt wird.

Im Folgenden wird die Struktur eines Transportstrompakets kurz anhand der Syntax-Beschreibung gemäß der Fig. 8a erläutert. Ein Transportstrom-Paket ("transport_packet"), das Teil eines MPEG2-Transportstroms ist, umfasst unter anderem ein Synchronisations-byte "synch_byte", das in einem 4-Byte-Präfix des Transportstrom-Pakets enthalten ist.

Das Transportstrom-Paket umfasst ferner einen Pakettyp-Identifizierer PID, der den Pakettyp angibt. Das Transportstrom-Paket umfasst ferner einen 2-Bit-Merker "transport_scrambling_control", der angibt, ob der Dateninhalt des Transportstrom-Pakets verschlüsselt ist bzw. mit welchem Schlüssel der Dateninhalt des Transportstrom-Pakets verschlüsselt ist. Das Transportstrom-Paket umfasst ferner einen 2-Bit-Merker "adaptation_field_control", der angibt, ob ein sogenanntes "Anpassungsfeld" ("adaptation_field") vorhanden ist, und ob Daten-Bytes (data_byte) vorhanden sind. Das sogenannte Anpassungsfeld geht bevorzugt den sonstigen Daten-Bytes in dem Transportstrom-Paket voraus. Für Details im Hinblick auf die Bedeutung der einzelnen Syntax-Elemente sei hier auf die ISO/IEC13818-1 verwiesen.

Fig. 8b zeigt im Übrigen eine Syntax-Darstellung eines Anpassungsfeldes eines Transportstrom-Pakets. Das Anpassungsfeld umfasst eine Anpassungsfeld-Längen-Wert "adaptation_field_length", der die Länge des Anpassungsfeldes angibt. Das Anpassungsfeld umfasst im Übrigen eine Mehrzahl von Merkern "discontinuity_indicator", "random_access_indicator", "elementary_stream_priority_indicator", "PCR_flag", "OPCR_flag", "splicing_point_flag", "transport_private_dala_flag" und "adaptati-on_field_extension_flag". Der Merker "transport_private_data_flag" gibt dabei an, ob das Anpassungsfeld sogenannte "private Daten" umfasst, die nicht durch die ISO/IEC spezifiziert sind, und die erfindungsgemäß zum Transport einer Zugangsbeschränkungsinformation genutzt werden.

Das Anpassungsfeld umfasst beispielsweise optional Parameter "program_clock_reference_base" und "program_clock_reference_extension", wenn der Merker "PCR_flag" gesetzt ist. Ferner umfasst das Anpassungsfeld optional einen Parameter "splice_countdown", wenn der Merker "splicing_point_flag" gesetzt ist.

Das Anpassungsfeld umfasst ferner einen Privatdaten-Abschnitt, sofern der Merker "transport_private_data_flag" gesetzt ist. Der Privatdatenabschnitt umfasst, sofern er vorhanden ist, eine Längeangabe "transport_private_data_length", die die Länge des Privatdatenabschnitts angibt. Der Privatdatenabschnitt umfasst ferner, sofern vorhanden, ein oder mehrere Privatdaten-Bytes "private_data_byte". Die Privatdatenbytes "private_data_byte" werden bei einem bevorzugten Ausführungsbeispiel der Erfindung verwendet, um die Zugangsbeschränkungsinformation zu codieren. In anderen Worten, der Privatdatenabschnitt eines Anpassungsfeldes "adaptation_field" in einem Transportstrom-Paket, das die Programm-Zuordnungs-Tabelle trägt und durch einen entsprechenden Pakettyp-Identifizierer PID = 0x000 gekennzeichnet ist, umfasst die Zugangsbeschränkungsinformation, beispielsweise in Form einer oder mehrerer Tabellen, die im Folgenden noch näher erläutert werden. Für Details im Hinblick auf die Syntax des Anpassungsfeldes sei im Übrigen auf die ISO/IEC13818-1 und auf die ETSI TS 102 428 V1.2.1 verwiesen.

### 5.4. Syntax der Tabellen "CA_section", "CA_ECM_section" und "CA_data"

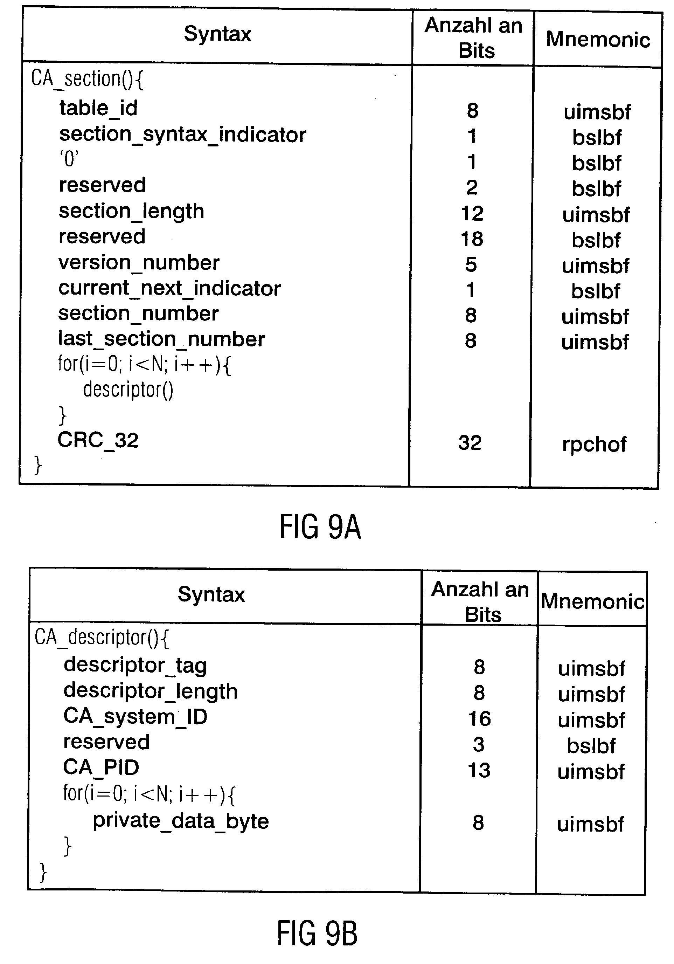

Im Folgenden wird anhand der Fig. 9a, 9b, 10 und 11 die Syntax von verschiedenen Tabellen, die die Zugangsbeschränkungsinformation enthalten, beschrieben. Die Zugangsbeschränkungsinformationen, die beispielsweise durch den Privatdatenabschnitt des Anpassungsfeldes gemäß der Fig. 8 beschrieben wird, kann beispielsweise zur Beschreibung von Berechtigungs-Verwaltungs-Nachrichten einen Tabellen-Abschnitt mit der Syntax gemäß den Fig. 9a und 9b aufweisen. Der Tabellenabschnitt umfasst beispielsweise einen Tabellenidentifizierer "table_id", der die Art der Tabelle bezeichnet. Der Tabellen-identifizierer "table_id" kann beispielsweise eindeutig gewählt werden, um die Tabelle gemäß den Fig. 9a und 9b von anderen Tabellen mit Zugangsbeschränkungsinformationen zu unterscheiden. Der Tabellenabschnitt gemäß der Fig. 9a umfasst ferner einen Merker "section_syntax_indicator" der beispielsweise auf einen vorbestimmten Wert gesetzt sein kann. Ferner umfasst der Tabellenabschnitt eine Längeninformation "section_length", die eine Länge des Abschnitts beschreibt. Außerdem umfasst der Tabellenabschnitt einen Identifizierer "version_number", der eine Versionsnummer der Syntax beschreibt. Ein Merker "current_next_indicator" gibt an, ob die übertragenen Informationen für einen gegenwärtigen Inhalt oder für einen später übertragenen Medieninhalt angewendet werden sollen. Eine Information "section_number" gibt eine Nummer eines Abschnitts an, um eine Aufteilung der Zugangsbeschränkungsinformation auf mehrere Abschnitte zu ermöglichen. Eine Information "last_section_number" beschreibt eine Nummer eines letzten Abschnitts. Ferner umfasst der Abschnitt gemäß der Fig. 9a einen oder mehrere Deskriptoren "descriptor", deren Syntax und Bedeutung anhand der Syntaxbeschreibung der Fig. 9b erläutert ist. Schließlich umfasst ein Tabellenabschnitt gemäß der Fig. 9a auch noch eine Prüfsumme "CRC_32".

Der Deskriptor "CA_descriptor", dessen Syntax in Fig. 9b gezeigt ist, und der der Rolle des in der Fig. 9a gezeigten Deskriptors "descriptor" übernehmen kann, umfasst ein Deskriptor-Kennzeichen "descriptor_tag" und eine Deskriptor-Längenangabe "descriptor_length". Ferner umfasst der in der Fig. 9b beschriebene Deskriptor ein System-Kennzeichen "CA_system_ID", das den Typ des Zugangsbeschränkungssystems beschreibt. Zudem umfasst der Deskriptor gemäß der Figur 9b einen Pakettyp-Bezeichner "CA_PID, der den Pakettyp-Identifizierer PID von Transportstrom-Paketen anzeigt, die Berechtigungs-Verwaltungs-Nachrichten-Informationen enthalten. Insofern kann der Deskriptor einen Verweis auf bestimmte Transportstrom-Pakete mit dem Pakettyp-Identifizierer CA_PID aufweisen. Der Verweis "CA_PID" kann aber auch als Verweis auf eine andere Tabelle angesehen werden, die in dem Privatdatenbereich desselben Transportstrom-Pakets oder eines anderen Transportstrom-Pakets enthalten ist, und die einen Identifizierer aufweist, der gleich dem durch den Deskriptor beschriebenen Wert "CA_PID" ist. Somit kann also ein Verweis zwischen einer Tabelle "CA_section()" und einer Tabelle "CA_data()" hergestellt werden. Alternativ dazu (also alternativ zu einem Verweis auf ein anderes Transportstrom-Paket bzw. auf eine andere Tabelle) kann der Deskriptor aber auch unmittelbar Berechtigungs-Verwaltungs-Nachrichten umfassen, die beispielsweise am Ende des jeweiligen Deskriptors als private Daten-Bytes ("private_data_byte") angehängt sein können.

Alternativ oder zusätzlich kann der Deskriptor auch einen Verweis auf einen bestimmten Kanal aufweisen, in dem die Berechtigungs-Verwaltungs-Nachrichten EMM übertragen werden.

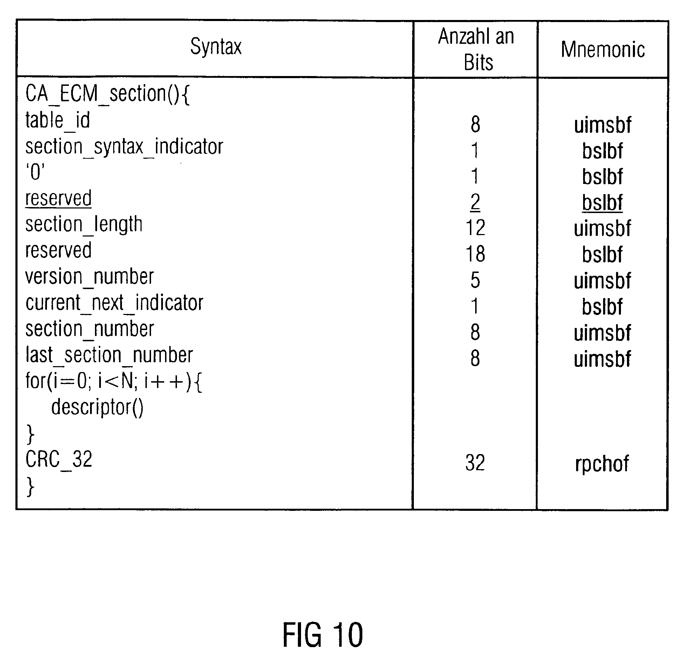

Im Folgenden wird anhand der Syntaxbeschreibung der Fig. 10 dargelegt, wie Verweise auf Berechtigungs-Steuerungs-Nachrichten codiert sein können. Die Syntaxbeschreibung der Fig. 10 beschreibt eine Tabelle, die beispielsweise alternativ zu der Tabelle gemäß der Fig. 9a oder aber auch zusätzlich zu der Tabelle gemäß Fig. 9a in dem Privatdatenabschnitt des Anpassungsfeldes gemäß der Fig. 8b enthalten sein kann. Es ist hierbei ersichtlich, dass die Syntax der Tabelle "CA_ECM_section()" der Fig. 10 im Wesentlichen der Syntax der Tabelle gemäß der Fig. 9a entspricht. Allerdings können in der Tabelle gemäß der Fig. 10 beispielsweise andere Deskriptoren "descriptor" verwendet werden als in der Tabelle gemäß der Fig. 9a. Beispielsweise können die Deskriptoren in der Tabelle gemäß der Fig. 10 unmittelbar die Berechtigungs-Steuerungs-Nachrichten ECM darstellen anstatt lediglich Verweise darzustellen.

Für Details im Hinblick auf die Bedeutung der einzelnen Syntaxelemente der Tabelle gemäß der Fig. 10 sei im Übrigen auf die Beschreibung betreffend die Tabelle gemäß der Fig. 9a verwiesen. In beiden Tabellen sind aber nicht alle der angegebenen Merker bzw. Werte erforderlich, so dass einige der Merker bzw. Werte, die nicht unmittelbar die Zugangsbeschränkungsinformation betreffen, optional weggelassen werden können.

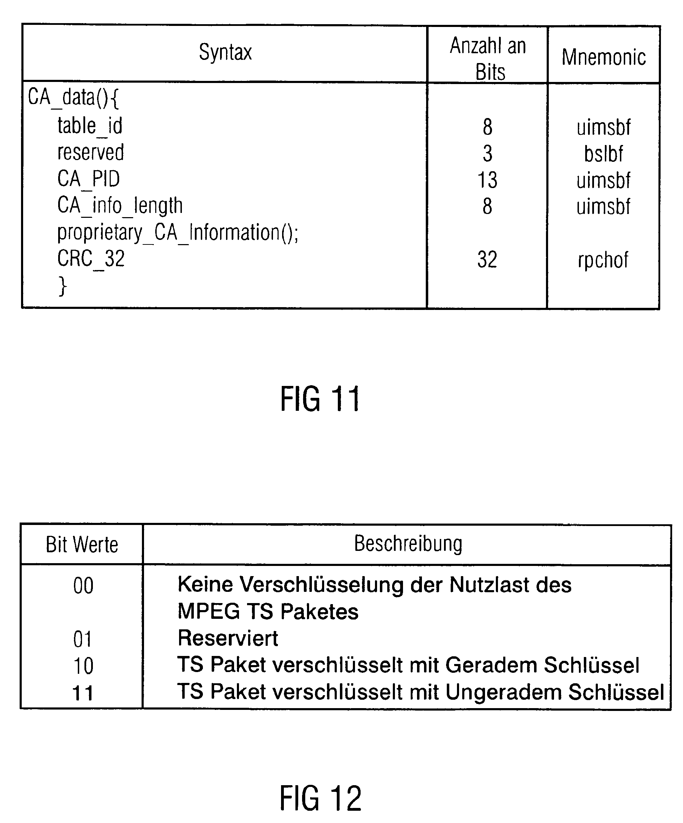

Fig. 11 zeigt eine Syntaxbeschreibung einer weiteren Tabelle mit Zugangsbeschränkungsinformationen, die alternativ oder zusätzlich zu den Tabellen gemäß den Figuren 9a und 10 in dem Privatdatenbereich des Anpassungsfeldes gemäß der Fig. 8b enthalten sein kann. Die Tabelle gemäß der Fig. 11 umfasst einen Tabellen-Identifizierer "table_ID", der typischerweise einen anderen Wert annimmt als die Tabellen-Identifizierer gemäß den Tabellen der Figuren 9a und 10. Ferner kann die Tabelle gemäß der Fig. 11 einen Verweis "CA_PID" (in Form eines Pakettyp-Identifizierers) aufweisen. Der Verweis "CA_PID" in der Tabelle "CA_data()" kann beispielsweise auf einen Pakettyp verweisen, der weitergehende Zugangsbeschränkungsinformationen umfasst. Alternativ dazu kann der Wert "CA_PID" in der Tabelle "CA_data()" auch anzeigen, dass die Tabelle "CA_data()" Informationen trägt, die normalerweise in einem separaten Transportstrom-Paket des Typs "CA_PID" enthalten wären. Somit kann aus einer anderen Tabelle, zum Beispiel der Tabelle "CA_section()" oder der Tabelle "CA_ECM_section()" auf die Tabelle "CA_data()" verwiesen werden, wobei die Tabelle "CA_data()" durch den Wert in dem Feld "CA_PID" als Verweisziel identifiziert wird. Die Tabelle gemäß der Fig. 11 kann weiterhin proprietäre Zugangsbeschränkungsinformationen in einem Feld "proprietary_CA_information" enthalten, dessen Länge beispielsweise durch eine Längenbeschreibung "CA_info_length" beschrieben werden kann.

Im Folgenden werden einige Aspekte im Hinblick auf eine beispielhafte Codierung der CA-Informationen zusammengefasst. Die Einbettung der CA-Informationen erfolgt beispielsweise im Feld "transport_private_data" innerhalb des Anpassungsfeldes "adaptation_field()" im Transportstrom-Paket-Nachrichtenkopf. Diese Einbettung erfolgt beispielsweise analog zu der in der Referenz [3] beschriebenen. Bei einer Einbettung, wie sie in der Referenz [3] beschrieben ist, gibt das erste Byte (innerhalb der Sequenz von Datenwerten "private_data_byte") an, welche Daten im Feld "transport_private_data" (auch als Privatdatenbereich bezeichnet) eingebettet sind. Die Referenz [3] beschreibt in Tabelle 12 folgende erlaubte Identifizierer für einen Transport von privaten Daten:

| Identifizierer | **Nutzlast ("payload")** |
|---|---|
| 0 | **PAD** |
| 1 bis 255 | **reserviert** |

Die im Folgenden beschriebene beispielhafte Codierung ergänzt diese Codierung und stellt sicher, dass das erste Byte im Feld "transport_private_data" (nach der Längenbeschreibung "transport_private_data_length") jeweils unterschiedlich zum Wert 0 ist (der bereits für PAD vorgesehen ist).

Diesbezüglich sei darauf hingewiesen, dass PAD-Daten nur für DMB-Radio (also nicht für DMB-Fernsehen) erlaubt sind. Die im Folgenden vorgeschlagene Codierung stellt aber selbst bei DMB-Radio sicher, dass ein existierender DMB-Radio-Empfänger Daten des Feldes "transport_private_data", die sich auf eine Zugangsbeschränkung beziehen, nicht als PAD-Daten interpretieren würde.

Während die PAD-Codierung, die verwendet wird, wenn das erste Byte (nach der Längenbeschreibung "transport_private_data_length") den Wert 0 hat, davon ausgeht, dass alle weiteren Daten des Feldes "transport_private_data" nunmehr PAD-Daten sind, sorgt die folgende Codierung dafür, dass mehrere Datenfelder unterschiedlichen Typs in einem Feld "transport_private_data" abgelegt werden können (und durch einen Transportstrom-Analysierer daraus extrahiert werden können).

Bei den Zugangsbeschränkungsinformationen sind zu unterscheiden:
- Verweise auf Berechtigungs-Verwaltungs-Nachrichten EMM; diese können z. B. codiert sein wie der Zugangsbeschränkungsabschnitt "CA_section()" gemäß Referenz [6], mit einem Verweis auf eine PID der Berechtigungs-Verwaltungs-Pakete (EMM-Pakete) im selben MPEG-Transportstrom (eventuell auch entsprechend den proprietären Berechtigungs-Steuerungs-Nachrichten ECM codiert) oder einem anderen MPEG- Transportstrom.
- Verweise auf Berechtigungs-Steuerungs-Nachrichten ECM; diese können z. B. so codiert sein wie dies unten im Hinblick auf die Tabelle "CA_ECM_section()" (gegebenenfalls in Verbindung mit der Tabelle "CA_data()") beschrieben ist.
- Datenstrukturen für die proprietären Berechtigungs-Steuerungs-Nachrichten ECM und andere CA-Daten; diese können z. B. wie unten beschrieben codiert sein.
- Verweise auf Berechtigungs-Steuerungs-Nachrichten ECM können beispielsweise codiert sein, wie dies anhand der Syntaxbeschreibung der Fig. 10 beschrieben ist. Die Codierung gemäß der Syntaxbeschreibung in Fig. 10 ist im Wesentlichen identisch zu der Codierung des Zugangsbeschränkungsabschnitts "CA_section()" gemäß der Referenz [6], wobei nur der Tabellenidentifizierer "table_ID" ein anderer wäre, da diese Tabelle zum Auffinden von Berechtigungs-Steuerungs-Nachrichten ECM dient, während die Tabelle "CA_section()" zur Auffindung von Berechtigungs-Verwaltungsnachrichten EMM dient. Der Tabellen-Identifizierer "table_ID" könnte beispielsweise für die Tabelle "CA_ECM_section()" gleich 0x2 sein, um diese Information von den PAD-Daten bei DMB-Radio (Tabellenidentifizierer 0x0) und von den Daten einer Tabelle "CA_section()" (Tabellenidentifizierer 0x1) unterscheiden zu können.

Die in dem Deskriptor "CA_descriptor" der Tabellen gemäß den Figuren 9a und 10 ("CA_ECM_section()" bzw. "CA_section()") enthaltenen Identifizierer bzw. Pakettyp-Identifizierer ("CA_PID-Werte") identifizieren üblicherweise die Pakettypen PID der Transportstrom-Pakete, die ECM-Informationen (Tabelle "CA_ECM_section()" gemäß Fig. 10) oder EMM-Informationen (Tabelle "CA_section()" gemäß Fig. 9a) enthalten. Gemäß der vorliegenden Erfindung können die Identifizierer "CA_PID" als Identifizierer genutzt werden, um die in einer Tabelle "CA_data()" enthaltene proprietäre CA-Information ("proprietary_CA_infbrmation()") zu identifizieren. In anderen Worten, anstatt separate Transportstrom-Pakete mit einem zugeordneten spezifischen Pakettyp für die Übertragung der ECM-Information bzw. der EMM-Information zu verwenden, kann die ECM-Information bzw. EMM-Information in Untertabellen "CA_data()" gemäß Fig. 11 enthalten sein. Diese Untertabellen "CA_data()" können, ebenso wie die Tabellen "CA_section()" und "CA_ECM_section()" in dem Anpassungsfeld bzw. in dem Privatdatenbereich ("private_data_byte") des Anpassungsfeldes ("adaptation_field") enthalten sein. Die Tabellen CA_section(), CA_ECM_section() und CA_data() sind bevorzugt in Transportstrom-Paketen, die die Programmzuordnungstabelle enthalten, da in diesen Paketen typischerweise unabhängig von der Codierungs-Bitrate der Nutzdaten (Audiodaten bzw. Videodaten) noch genügend Platz ist.

Die Datenstruktur für ECM-Informationen, die im Prinzip auch für EMM-Informationen und andere CA-Daten (das heißt, Daten für die Zugangsbeschränkung) nutzbar ist, kann beispielsweise so codiert sein, wie dies in der Syntaxbeschreibung der Fig. 11 gezeigt ist. Bei Bedarf, also beispielsweise bei großem Datenbedarf, könnte die proprietäre CA-Information ("proprietary_CA_information()") auch Fragmentierung überlassen. Die genaue Codierung ist dem jeweiligen Zugangsbeschränkungssystem bzw. CA-System überlassen. Eine Tabelle mit CA-Informationen, die mit "CA_data()" bezeichnet ist, umfasst beispielsweise einen Tabellen-Identifizierer "table_ID" sowie einen Identifizierer "CA_PID". Der Identifizierer CA_PID korrespondiert dabei zu einem Identifizierer, der beispielsweise durch den Wert "CA_PID" in einem Deskriptor "CA_descriptor()" einer Tabelle "CA_section()" enthalten ist. Somit umfasst beispielsweise die Tabelle "CA_section()" über den Wert CA_PID des Deskriptors "CA_descriptor" einen Verweis auf eine bestimmte Tabelle "CA_data()". In anderen Worten, der Wert CA_PID der Tabelle "CA_data()" gibt an, welcher übergeordnete Tabelle "CA_section()" bzw. "CA_ECM_section()" die in der Tabelle "CA_data()" enthaltene proprietäre CA-Information "proprietary_CA_information()" zugeordnet ist. Die Tabelle "CA data" umfasst im übrigen eine Längenangabe "CA_info_length", die eine Länge der in der Tabelle "CA_data()" enthaltenen proprietären CA-Information "proprietary_CA_information()" angibt.

Der Tabellen-Identifizierer "table_ID" der Tabelle "CA_data()" kann beispielsweise 0x3 sein, um diese Informationen von den PAD-Daten bei DMB-Radio, von "CA_section()" und "CA_ECM_section()" unterscheiden zu können.

Eine Sequenz der Tabellen "CA_section()", "CA_ECM_section()" und/oder "CA_data()" wird bevorzugt in dem Feld "transport_private_data" der PAT-Pakete (und optional auch der "Füll"-Pakete (auch als Pakete "Padding" bzw. "Null" bezeichnet) übertragen. Da jedes einzelne Element (bzw. jede einzelne Tabelle) eine Typenangabe (den Tabellen-Identifizierer "table_ID") sowie einen Längenindikator (beispielsweise den Längenindikator "section_length"), bzw. die Längenangabe "CA_info_length" trägt, kann diese Sequenz (von Tabellen) leicht wieder in die Einzelelemente (einzelne Tabellen) aufgeteilt werden.

Die eigentliche Verschlüsselung kann beispielsweise auf MPEG-Transportstrom-Ebene erfolgen. Es ist dabei dem Verschlüsseler bzw. "Scrambler" überlassen, ob alle Pakete außer Paketen mit der Programmzuordnungstabelle PAT bzw. "Füll"-Pakete (sogenannte "Padding"-Pakete bzw. "Null"-Pakete) verschlüsselt werden, oder ob selektiver verschlüsselt wird, so dass z. B. die Programmabbildungstabelle PMT und eine Audiokomponente unverschlüsselt belassen werden. Bei partieller Verschlüsselung sollte die Programmzuordnungstabelle PAT angepasst werden, um den Empfänger zu signalisieren, dass verschlüsselt wird. Der Parameter "transport_scrambling_control_values" im Transportstrom-Paket-Nachrichtenkopf kann dabei anzeigen, ob ein MPEG- Transportstrom-Paket verschlüsselte Daten enthält. Beispielsweise kann im Hinblick auf den Parameter "transport_scrambling_control" die Zuordnung gemäß der Tabelle in Fig. 12 verwendet werden.

### 5.5. Syntax der Programmzuordnungstabelle PAT ("programm_association_section")

Im Folgenden wird noch kurz die Programmzuordnungstabelle PAT bzw. der Programm-Zuordnungs-Abschnitt beschrieben, der beispielsweise durch die Daten "data_byte" eines Transportstrom-Pakets mit dem Paket-Identifizierer PID = 0x0000 dargestellt werden kann.

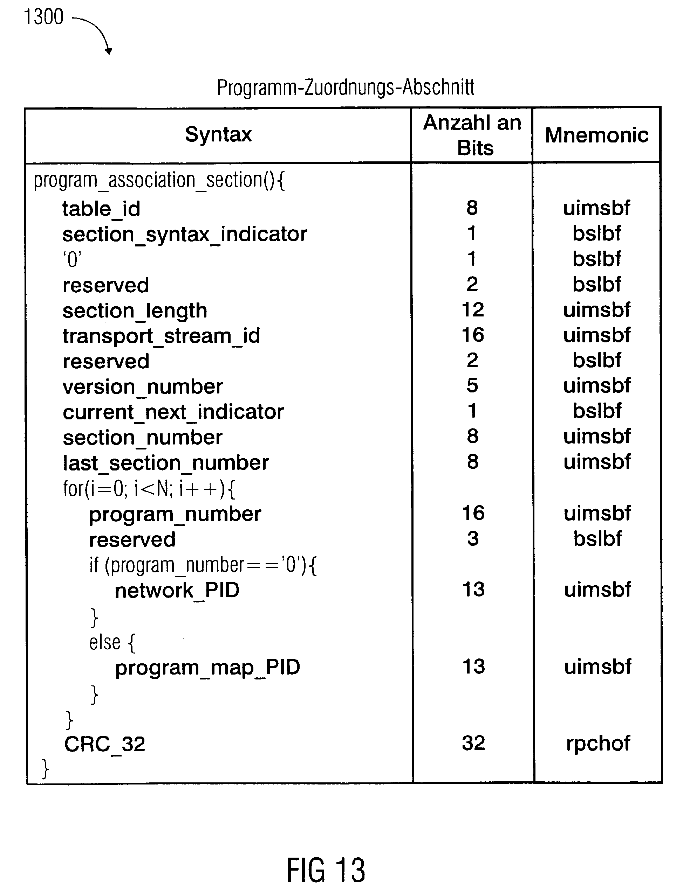

Eine Syntaxdarstellung des Programm-Zuordnungs-Abschnitts "pro-gram_association_section()" ist in Fig. 13 gezeigt. Der Programm-Zuordnungs-Abschnitt umfasst einen Tabellen-Identifizierer "table_ID" sowie einen Syntax-Merker "section_syntax_indicator". Ferner umfasst der Programm-Zuordnungs-Abschnitt eine Längenangabe "section_length". Daneben umfasst der Programm-Zuordnungs-Abschnitt einen Transportstrom-Identifizierer "transport_stream_ID" sowie eine Versionsnummernangabe "version_number". Im Übrigen umfasst der Programm-Zuordnungs-Abschnitt einen Merker "current_next_indicator", der anzeigt, ob der Programm-Zuordnungs-Abschnitt für gegenwärtige Medieninhalte oder für später übertragene Medieninhalte wirksam sein soll. Daneben umfasst der Programm-Zuordnungs-Abschnitt eine AbschnittsNummer-Angabe "section_number" sowie eine Angabe "last_section_number", die einen letzten Abschnitt einer Folge von Abschnitten bezeichnet. Die genannten Abschnitts-Nummern ermöglichen es, einen Programm-Zuordnungs-Abschnitt auf mehrere Pakete aufzuteilen.

Zudem umfasst der Programm-Zuordnungs-Abschnitt einen Programm-Nummern-Identifizierer "program_number" sowie einen Pakettyp-Identifizierer "pro-gram_map_PID", der einen Pakettyp eines Transportstrom-Pakets anzeigt, das eine Programmzuordnungstabelle umfasst.

Schließlich umfasst der Programm-Zuordnungs-Abschnitt auch eine Prüfsumme "CRC_32".

### 6. Empfängerverhalten

Im Folgenden wird kurz das Verhalten eines Empfängers beschrieben, der den oben erläuterten Transportstrom empfängt. Ein DMB-CA-Empfänger, also ein Empfänger für einen digitalen Multimedia-Rundfunk mit Zugangsbeschränkung, verhält sich nach dem Anwählen eines DMB-Datenstroms wie folgt:

In einem ersten Schritt wartet der Empfänger auf die Programmzuordnungstabelle PAT. Diese ist leicht an dem Pakettyp-Identifizierer bzw. der Programm-Identifizierung PID in dem MPEG-Transportstrom-Nachrichtenkopf zu erkennen, denn dieser Pakettyp-Identifizierer muss 0 sein (oder einen anderen vorgegebenen Wert aufweisen). In diesem MPEG- Transportstrom-Paket erkennt er nun durch die eingebetteten Zugangsbeschränkungs-Deskriptoren in den Tabellen "CA_ECM_section()" bzw. "CA_section()" innerhalb des Privatdatenbereichs "transport_private_data", ob eine Zugangsbeschränkung CA verwendet wird, und ob er das verwendete Zugangsbeschränkungssystem (CA-System) unterstützt. Falls ja, muss er den Zugangsbeschränkungs-Deskriptor des von ihm unterstützten Verfahrens auswerten. Gegebenenfalls muss der Empfänger also auch auf weitere PAT-Pakete (bzw. "Füll"-Pakete bzw. "Padding"-Pakete bzw. "Null-Pakete) und/oder die "üblichen" Zugangsbeschränkungs-Pakete bzw. CA-Pakete warten, bis er alle nötigen Informationen aufgesammelt hat. Anschließend kann nun bei jedem anderen MPEG-Transportstrom-Paket (also Paketen mit einem Pakettyp-Identifizierer PID ≠ 0) anhand der Werte der Information "transport_scrambling_control" erkannt werden, ob das Paket verschlüsselt ist und welcher Schlüssel gegebenenfalls benötigt wird.

Ein entsprechendes Empfängerverhalten kann beispielsweise zumindest teilweise durch den Transportstrom-Analysierer 300 bzw. durch den DAB-Empfänger 400 erzielt werden.

### 7. Alternative Konzepte

Im Folgenden werden noch einige alternative derzeit mögliche Konzepte betreffend die grundlegende Struktur von Zugangsbeschränkungs-Verfahren für den digitalen Multimedia-Rundfunk DMB beschrieben.

### 7.1 Verschlüsselung nach der Referenz [6]

Zur Realisierung einer Zugangsbeschränkung kann beispielsweise eine Verschlüsselung von MPEG- Transportströmen (z. B. von MPEG-2 Transportstrom-Paketen zu jeweils 188 Bytes) oder von kompletten MPEG-4 codierten Programmen bzw. Programmteilen (wie beispielsweise elementaren Programmströmen PES) erfolgen. Diese Verschlüsselung entspricht der bei der DVB-T genutzten Verschlüsselung.

Im Folgenden wird dieses Verschlüsselungsverfahren kurz beschrieben. Die Fig. 15 zeigt ein Blockschaltbild eines Signal-Bereitstellers. Der Signal-Bereitsteller 1500 gemäß Fig. 15 umfasst einen DMB-Codierer 1520, der ausgelegt ist, um eine Medieninformation, z. B. eine Audioinformation und/oder eine Videoinformation 1510, zu empfangen und basierend darauf einen MPEG-2 Transportstrom 1522 bereitzustellen. Ein Zugangsbeschränker bzw. Zugangsbeschränkungs-Hinzufüger 1530 empfängt den MPEG-2 Transportstrom 1522 und liefert basierend darauf einen zumindest teilweise verschlüsselten MPEG-2 Transportstrom 1532. Ein DMB-Gateway 1540 empfängt den zumindest teilweise verschlüsselten MPEG-2 Transportstrom 1532 und liefert basierend darauf ein DAB-Unterkanalsignal 1542. Ein DAB-Multiplexer 1550 empfängt das DAB-Unterkanalsignal 1542 und stellt basierend darauf das DAB-Signal bereit.

Der DMB-Codierer (DMB-Encoder) 1520 beschreibt das codierte Programm und dessen Programmelement (z. B. Audio und Video) innerhalb der Programmabbildungstabelle PMT. Im Falle eines verschlüsselten Datenstroms muss diese Signalisierung auch beschreiben, was verschlüsselt wird (komplettes Programm oder nur Teil eines Programms) und mit welchen Verfahren. Des Weiteren müssen auch für die Entschlüsselung notwendige Zugangsbeschränkungsinformationen (z. B. ECM-Informationen) in den MPEG-2 Transportstrom-Datenstrom eingebettet werden.

Entweder fügt nun der DMB-Codierer 1520 die nötige Signalisierung ein (obwohl er selber nicht notwendigerweise bereits verschlüsselt), oder aber das Zugangsbeschränkungsmodul (CA-Modul 1530) passt die Signalisierungsinformation an und fügt die nötigen Zugangsbeschränkungsinformationen hinzu. Da die Datenrate eines DAB-Unterkanals 1542 vorgegeben ist, bedeutet dies, dass der DMB-Codierer 1520 nicht die gesamte Datenrate des Unterkanals nutzen darf, sondern einen Teil der Datenrate (also eine bestimmte Anzahl von MPEG-Transportstrom-Paketen) nicht nutzt und diese somit dem Zugangsbeschränkungsmodul 1530 zur Verfügung stehen. Die Übertragung von einem MPEG-Transportstrom-Paket pro Sekunde entspricht dabei einer Datenrate von 1632 Bit/s (inklusive des zusätzlichen Fehlerschutzes).

Das soeben beschriebene Verfahren bringt allerdings einige Verfahrensnachteile mit sich, die im Folgenden beschrieben werden. Der DMB-Codierer 1520 muss zwar selbst keine Verschlüsselung vornehmen, muss aber in der Lage sein, zumindest eine bestimmte Anzahl von MPEG-Transportstrom-Paketen ungenutzt zu lassen, damit diese für die Übertragung der Zugangsbeschränkungsinformationen (und einer eventuell durch eine Zugangsbeschränkungs-Signalisierung verlängerten Programmabbildungs-Tabelle PMT) zur Verfügung steht. Dies bedeutet eine notwendige Anpassung dieser Kodierer 1520. Ein Kodierer, der für unverschlüsseltes DMB entwickelt wurde, muss modifiziert werden, damit verschlüsseltes DMB möglich wird.

### 7.2. Verschlüsselung von DAB-Unterkanälen nach der Referenz [5]

Im Folgenden wird eine Verschlüsselung von DAB-Unterkanälen (auch als "subchannels" bezeichnet) beschrieben, die auch kurz als "DAB subchannel CA" bezeichnet wird.

Ein DAB-Unterkanal ist ein Kanal fester Datenrate. Alle 24 ms erhält ein DAB-Empfänger zu jedem DAB-Unterkanal eine feste Anzahl von Bytes, DAB-Rahmen bzw. "DAB Frame" genannt. Die Anzahl der Bytes hängt von der (festen) Bitrate des Kanals ab.

Bei DAB-Unterkanal- Zugangsbeschränkung (DAB subchannel CA) besteht ein DAB-Rahmen aus zwei Teilen. Der erste Teil des Rahmens enthält CA-Daten (z. B. ECMs, EMMs), und der zweite und mit Abstand größte Teil des Rahmens enthält die verschlüsselten Nutzdaten.

Fig. 16 zeigt bei Bezugszeichen 1610 die schematische Darstellung von DAB-Rahmen mit einer Länge von beispielsweise 24 ms. Eine erste Nachricht ist mit 1612 bezeichnet, und eine zweite Nachricht ist mit 1614 bezeichnet. Die erste Nachricht 1612 enthält CA-Daten 1612a und verschlüsselte Nutzdaten 1612b. In ähnlicher Weise enthält die zweite Nachricht 1614 CA-Daten 1614a und verschlüsselte Nutzdaten 1614b.

Fig. 16 zeigt ferner bei Bezugszeichen 1620 ein Blockschaltbild eines DAB-Signal-Bereitstellers, der das entsprechende Konzept verwirklicht. Der DAB-Bereitsteller 1620 umfasst einen DAB-Kodierer 1630, der ausgelegt ist, um Audiodaten und/oder Videodaten 1628 zu empfangen und basierend darauf einen MPEG-2 Transportstrom 1632 bereitzustellen. Der DAB-Signal-Bereitsteller 1620 umfasst ferner einen DMB-Gateway 1640, der ausgelegt ist, um den MPEG-2 Transportstrom 1632 zu empfangen und basierend darauf einen DAB-Unterkanal 1642 bereitzustellen. Der DAB-Signal-Bereitsteller 1620 umfasst ferner einen Zugangsberechtigungs-Hinzufüger 1650, der ausgelegt ist, um den DAB-Unterkanal 1642 zu empfangen und basierend darauf einen zumindest teilweise verschlüsselten DAB-Unterkanal 1652 bereitzustellen, der einem DAB-Multiplexer 1660 als Eingangssignal zugeführt wird. Der DAB-Multiplexer 1660 stellt basierend darauf das DAB-Signal bereit.

Im Folgenden wird das entsprechende Verfahren kurz beschrieben. Bei dem Verfahren werden die MPEG-Transportstrom-Pakete zuerst in DAB-Unterkanäle eingebettet und die resultierenden DAB-Rahmen (also die alle 24 ms übertragenen Bytes des Unterkanals) werden dann verschlüsselt. Das CA-Modul fügt dann CA-Informationen und verschlüsselte Daten zusammen und erzeugt einen DAB-Rahmen, der entsprechend größer ist (also mehr Bitrate benötigt) als der von dem DMB-Gateway 1640 gelieferte. Dazu werden an den Beginn jedes Rahmens die nötigen CA-Informationen 1612a, 1614a gefügt. Der Rest des resultierenden Rahmens enthält die verschlüsselten DMB-Daten 1612b, 1614b (also Teile des MPEG-2 Transportstrom-Datenstroms).

Prinzipbedingt ist mit DAB-Unterkanal-CA nur die komplette Verschlüsselung eines DMB-Programms möglich. Es ist nicht möglich, z. B. nur das Audio (bzw. den Audioanteil) zu verschlüsseln, aber das Video (bzw. den Videoanteil) unverschlüsselt zu belassen.

Da DAB-Unterkanäle immer ein Vielfaches von 8 kbps sein müssen, ist der Überhang ("overhead") durch DAB-Unterkanal-CA immer mindestens 8 kbps oder ein Vielfaches von 8 kbps.

Im Folgenden werden einige Verfahrensnachteile des soeben beschriebenen Konzepts erläutert. Zunächst ist festzuhalten, dass der verschlüsselte DAB-Rahmen zweigeteilt ist, wobei der erste Teil CA-Daten 1612a, 1614a enthält, und wobei der zweite Teil die verschlüsselten DMB-Daten 1612b, 1614b enthält. Die DMB-Daten sind, wie bei MPEG-Transportströmen üblich, durch eine Verschachtelung ("interleaver") und einen Reed-Solomon-Code gegen Übertragungsfehler geschützt. Die Art der Verschlüsselung bedeutet nun aber, dass zuerst der Fehlerschutz gerechnet und die fehlergeschützten MPEG-Transportstrom-Pakete danach verschlüsselt werden. Dies bedeutet aber auch, dass empfangsseitig erst entschlüsselt und danach Fehlerschutz angewandt werden muss. Dies widerspricht aber dem üblichen Aufbau eines Empfängers, bei dem zuerst der Fehlerschutz angewandt wird und anschließend die fehlerkorrigierten Daten weitergereicht werden. Die Zugangsbeschränkung müsste also auf sehr tiefen Protokollschichten des Empfängers eingebaut werden.

Die DMB-Daten sind zusätzlich gegen Übertragungsfehler geschützt. Es erscheint also empfehlenswert, dasselbe auch für die CA-Informationen zu fordern, denn falls diese nicht korrekt empfangen werden, ist ein Entschlüsseln des DMB-Stroms nicht möglich. Dafür trifft DAB-Unterkanal CA aber keinerlei Vorkehrungen. Dies müsste also erst (proprietär) erweitert werden.

DAB-Unterkanal CA erfordert auch immer mindestens 8 kbps an Überhang, und zwar aufgrund der Granularität eines DAB-Unterkanals.

### 7.3. Verschlüsselung von Zugangseinheiten entsprechend MPEG-4 IPMP

MPEG-4 IPMP bietet eine Ende-zu-Ende Verschlüsselung, die zwar sehr sicher ist, aber in den Kodierer (Encoder) integriert sein muss und sich daher nicht eignet, wenn ein vorhandener Datenstrom nachträglich verschlüsselt werden soll. MPEG-4 IPMP ist zudem nicht weit verbreitet.

### 8. Schlussfolgerungen

Ausführungsbeispiele gemäß der Erfindung ermöglichen es, den Überhang, der durch das Aussenden der CA-Informationen entsteht, so gering wie möglich zu halten. Dies kann zum einen durch kurze CA-Informationen, zum anderen aber auch durch ein geschicktes Einbetten der CA-Informationen geschehen.

Die Länge der CA-Informationen differiert je nach eingesetztem CA-System. Für das geschickte Einbetten der CA-Informationen wird erfindungsgemäß ein CA-Gerüst definiert. Dieses CA-Gerüst ist unabhängig von dem eingesetzten CA-System. Es definiert,
1. auf welcher Transportebene verschlüsselt werden soll;
2. wie eine Verschlüsselung signalisiert wird; und
3. wo die CA-Informationen (EMM und ECM) einzubetten sind.

Bezahl-Fernsehen (Pay-TV) unter Ausnutzung der DMB-Technologie ist eine relativ neue Anwendung. Im Gegensatz zu DVB-T, das auch MPEG-2 Transportströme nutzt, und DAB gibt es für DMB noch kein definiertes Gerüst für eine Zugangsbeschränkung. Oben wurde beschrieben, warum eine Verschlüsselung analog des Zugangsbeschränkungs-Gerüsts für DVB-T bzw. des Zugangsbeschränkungs-Gerüsts DAB zwar möglich, aber nicht optimal ist. Es wird hierin im Übrigen ein erfindungsgemäßes Zugangsbeschränkungsgerüst speziell für DMB beschrieben, das den folgenden Anforderungen genügt:
1. Definition eines Zugangsbeschränkungs-Gerüsts, das für jedes Zugangsbeschränkungssystem und jedes Verschlüsselungsverfahren anwendbar ist.
2. Definition der Verschlüsselungsebenen und Einbettung der ZugangsbeschränkungsInformationen für DMB;
3. Definition der Signalisierung;
4. Bitraten-sparende Übertragung der CA-Informationen;
5. Transport der Inhaltsschlüssel (ECMs) im gleichen Kanal wie der Inhalt selbst;
6. Transport aller EMMs in einem separaten "Masterkanal" ist möglich;
7. Leichte Integrierbarkeit in bestehende Sendesysteme;
8. Die Beschreibung des Verfahrens ist möglichst einfach, d. h. nutzt möglichst viele vorhandene Mechanismen. Dabei wird eine einfache Teilmenge der insgesamt für DMB möglichen Verschlüsselungsarten (also z. B. nur eine Ebene, auf der verschlüsselt wird, z. B. eben nur MPEG-Transportstrom-Verschlüsselung) gefunden, um die Komplexität des Empfängers gering zu halten.

Ausführungsbeispiele gemäß der Erfindung erfüllen die genannten Anforderungen und schaffen somit ein besonders vorteilhaftes Konzept der Zugangsbeschränkung.

Im Folgenden werden einige wichtige Aspekte und Vorteile des Erfindungskonzepts noch einmal zusammengefasst.

Bei Ausführungsbeispielen gemäß der Erfindung erfolgt die Einbettung von CA-Informationen in vorhandene aber bisher ungenutzte Datenfelder. Erfindungsgemäß wird die Nutzung des Feldes "transport_private_data" innerhalb des Anpassungsfeldes "adaptation_field()" in dem Transportstrom-Paket-Nachrichtenkopf vorgeschlagen. Eine ausreichende nutzbare Datenrate ist beispielsweise innerhalb von Paketen mit einer Programm-zuordnungstabelle (PAT-Pakete) verfügbar. Die Einbettung der CA-Informationen erfolgt analog zur Einbettung von PAD-Daten in Referenz [3] in der PAT. Eine mögliche Codierung dieser CA-Informationen ist beispielhaft oben beschrieben. Die eigentliche Verschlüsselung wird auf Transportebene bzw. Transportstrom-Ebene bzw. Elementar-Programmstromebene durchgeführt (siehe Referenz [6]). Es ist beispielsweise möglich, zwei Audioströme zu versenden, von denen nur einer verschlüsselt ist.

Optional ist die zusätzliche Nutzung von "Füll"-Paketen ("Padding"-Paketen bzw. "Null"-Paketen) oder anderen MPEG-Transportstrom-Paketen mit eingebetteten CA-Informationen möglich.

Ausführungsbeispiele gemäß der Erfindung weisen erhebliche Verfahrensvorteile gegenüber anderen Verschlüsselungsverfahren auf. Gegenüber einer Verschlüsselung innerhalb der MPEG-Transportstrom-Pakete weisen Ausführungsbeispiele gemäß der Erfindung beispielsweise einen oder mehrere der folgenden Vorteile auf:
- Die bisher ungenutzte Datenrate wird genutzt, d. h. es muss keine Datenrate für CA-Informationen vorgesehen werden;
- Der DMB-Codierer kann die volle Datenrate nutzen, und es entsteht kein Überhang für CA-Informationen (es sind also keine MPEG-Transportstrom-Pakete reserviert für CA-Information ; und
- Da die CA-Informationen im selben MPEG-Transportstrom-Paket enthalten sind wie die Programmzuordnungstabelle PAT stehen sie beim Abstimmen bzw. Kanal-Wechsel ("tune-in") sehr schnell zur Verfügung. Eine Zugangsbeschränkung entsprechend diesem Vorschlag erhöht also, verglichen zu einem unverschlüsselten Datenstrom, nicht die Abstimmzeit bzw. Kanalwechselzeit.

Gegenüber einer Verschlüsselung von DAB-Unterkanälen (auch als "DAB-Subchannel-CA" bezeichnet) ergeben sich eine oder mehrere der folgenden Vorteile:
- kein Überhang von mindestens 8 kbps;
- die CA-Information ist fehlergeschützt;
- der komplette Unterkanal ist einheitlich codiert (alles ist MPEG-Transportstrom) und es gibt keine Zweiteilung; und
- die Verschlüsselung wird vor der Anwendung des Fehlerschutzes durchgeführt, was also dem üblichen Schichtenmodell des Empfängers entspricht.

Bei Ausführungsbeispielen gemäß der Erfindung wird somit die oben beschriebene Datenstruktur "CA-Descriptor" in das MPEG-Transportstrom-Paket mit der Programmzuordnungstabelle PAT eingebettet, und die eigentliche Verschlüsselung auf MPEG-Transportstrom-Ebene wird genutzt. Erfindungsgemäß werden Daten mit niedrigem Bitratenbedarf, nämlich die CA-Informationen, in die regelmäßig übertragenen aber recht leeren MPEG-Transportstrom-Pakete mit der Programmzuordnungstabelle eingebettet.

Die Einbettung der CA-Informationen ähnelt bzw. entspricht dabei der im DMB-Standard bereits für PAD-Daten genutzten Art der Einbettung

### 9. Implementierungsalternativen

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Ein erfindungsgemäß codiertes Signal, wie beispielsweise ein Audiosignal oder ein Videosignal oder ein Transportstromsignal oder ein DAB-Signal, kann auf einem digitalen Speichermedium gespeichert sein oder kann auf einem Übertragungsmedium wie beispielsweise einem drahtlosen Übertragungsmedium oder einem verdrahteten Übertragungsmedium, z.B. dem Internet, übertragen werden

Das erfindungsgemäße kodierte Audiosignal kann auf einem digitalen Speichermedium gespeichert sein, oder kann auf einem Übertragungsmedium, wie beispielsweise einem drahtlosen Übertragungsmedium oder einem drahtgebundenen Übertragungsmedium, wie beispielsweise dem Internet, übertragen werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### 10. Referenzen

[1] ETSI, ETR 289 (1996-10), Digital Video Broadcasting (DVB); Support for use of scrambling and Conditional Access (CA) within digital broadcast systems
[2] ETSI TS 102 428 v1.1.1 (2005-06): "Digital Audio Broadcasting (DAB); DMB video services; User application specification", 06/2005.
[3] ETSI TS 102 428 v1.2.1 (2009-06): "Digital Audio Broadcasting (DAB); DMB video services; User application specification", 06/2009.
[4] ETSI EN 300 401 V1.4.1 (2006-06): "Digital Audio Broadcasting (DAB) to mobile, portable and fixed receivers, 06/2006
[5] ETSI TS 102 367 V1.2.1 (2006-01): "Digital Audio Broadcasting (DAB); Conditional access), 01/2006
[6] ITU-T H.222.0 (2006-05): "Series H: Audiovisual and multimedia system, Infrastructure of audiovisual services - Transmission multiplexing and synchronization", "Information technology - Generic coding of moving pictures and associated audio information: Systems"

### 11. Legende

| | |
|---|---|
| elementary_PID | Elementare PID |
| DMB Encoder | DMB-Kodierer |
| TS packet | Transportstrom-Paket |
| MPEG_transport_stream | MPEG-Transportstrom |
| do | Tue |
| transport_packet | Transport-Paket |
| while | während |
| nextbits | nächste Bits |
| sync_byte | Synchronisationsbyte |
| program_number | Programmnummer |
| program_map_PID | Programm-Abbildungs-PID |
| Object Descriptor | Objekt-Deskriptor |
| ES_Descriptor | ES-Deskriptor |
| stream Type | Strom-Typ |
| specific Info | spezifische Information |
| Image | Bild |
| Audio | Audio |
| SD-Stream | SD-Strom |
| OD Stream | OD-Strom |
| program_stream_info_length | Programm-Strom-Informations-Länge |
| 1 st_descriptor_loop | erste Deskriptor-Schleife |
| IOD-Descriptor | IOD-Deskriptor |
| stream_type | Strom-Typ |
| elementary PID | elementare PID |
| 2nd_descriptor_loop | zweite Deskriptor-Schleife |
| SL_Descriptor | SL-Deskriptor |
| PES-packet | PES-Paket |
| adaptation_field_control | Anpassungs-Feld-Steuerung |
| adaptation_field | Anpassungsfeld |
| transport_private_data_flag | Transportiere-Private-Daten-Merker |
| transport_private_data_length | Transportiere-Private-Daten-Länge |
| program_association_section | Programm-Zuordnungs-Abschnitt |
| sync_byte | Synchronisations-Byte |
| transport_error_indicator | Transport-Fehler-Anzeiger |
| Payload_unit_start_indicator | Nutzlast-Einheit-Start-Anzeiger |
| transport_priority | Transport-Priorität |
| transport_scrambling_control | Transport-Verschlüsselungs-Steuerung |
| adaptation_field_control | Anpassungs-Feld-Steuerung |
| continuity_counter | Kontinuitäts-Zähler |
| if | falls |
| adaptation_field | Anpassungsfeld |
| data_byte | Datenbyte |
| adaptation_field_length | Anpassungs-Feld-Länge |
| discontinuity_indicator | Diskontinuitäts-Anzeiger |
| random_access_indicator | Anzeiger für wahlfreien Zugriff |
| elementary_stream_priority_indicator | Elementarstrom-Prioritäts-Anzeiger |
| PCR-Flag | PCR-Merker |
| OPCR_flag | OPCR-Merker |
| splicing_point_flag | Zusammenfügungs-Punkt-Merker |
| transport_private_data_flag | Transport-von-privaten-Daten-Merker |
| adaptation_field_extension_flag | Anpassungsfeld-Erweiterungs-Merker |
| program_clock_reference_base | Programm-Takt-Referenz-Basis |
| reserved | reserviert |
| program_clock_reference_extension | Programm-Takt-Referenz-Erweiterung |
| splice_countdown | Zusammenfügungs-Countdown |
| transport_private_data_length | Transport-von-privaten-Daten-Länge |
| for | für |
| Private_data_byte | Private-Daten-Byte |
| stuffing_byte | Stopf-Byte |
| CA_section | CA-Abschnitt |
| table_id | Tabellen-ID |
| section_syntax_indicator | Abschnitts-Syntax-Anzeiger |
| reserved | reserviert |
| section_length | Abschnitts-Länge |
| version number | Versionsnummer |
| current_next_indicator | gegenwärtig-nächstes-Anzeiger |
| section_number | Abschnittsnummer |
| last_section_number | letzter-Abschnitt-Nummer |
| descriptor | Deskriptor |
| CA_descriptor | CA-Deskriptor |
| descriptor_tag | Deskriptor-Marke |
| descriptor_length | Deskriptor-Länge |
| CA_system_ID | CA-System-ID |
| private_data_byte | Privat-Daten-Byte |
| CA_ECM_section | CA-ECM-Abschnitt |
| CA_data | CA-Daten |
| CA_info_lenth | CA-Informations-Länge |
| proprietary_CA_Information | proprietäre CA-Information |
| programm_association_section | Programm-Zuordnungs-Abschnitt |
| transport_stream id | Transportstrom-ID |
| version_number | Versionsnummer |
| current_next_indicator | gegenwärtig-nächstes-Anzeiger |
| section number | Abschnittsnummer |
| last_section_number | letzter-Abschnitt-Nummer |
| program_number | Programm-Nummer |
| network_PID | Netzwerk-PID |
| program_map_PID | Programm-Abbildungs-PID |

## Patentansprüche

1. Ein Transportstrom-Bereitsteller (100) zum Bereitstellen einer Mehrzahl von Transportstrom-Paketen (124,128; 282,284,286,288; 610,620), die eine digitale Medieninformation (110) beschreiben,
wobei der Transportstrom-Bereitsteller ausgelegt ist, um ein Transportstrom-Paket (124;282;610;700) eines ersten Pakettyps mit einer Programmzuordnungstabelle (720;1300) und einer Zugangsbeschränkungsinformation (730) mit einer Schlüsselinformation (CA_section, CA_ECM_section, CA_data) zur Entschlüsselung einer verschlüsselten Medieninformation bereitzustellen, wobei die Programmzuordnungstabelle (720;1300) eine Zuordnung zwischen einer Programmnummer und einem Pakettyp-Identifizierer eines weiteren Transportstrom-Pakets (128;284;620) eines zweiten Pakettyps enthält; und
wobei der Transportstrom-Bereitsteller ausgelegt ist, um ein Transportstrom-Paket (128;284;620) des zweiten Pakettyps so bereitzustellen, dass das Transportstrom-Paket des zweiten Pakettyps einen Verweis auf Pakettyp-Identifizierer von Transportstrom-Nutzdaten-Paketen (286,288;PES_packet) enthält, die Inhalte verschiedener Inhaltstypen der digitalen Medieninformation (110) beschreiben.

2. Der Transportstrom-Bereitsteller (100) gemäß Anspruch 1, wobei der Transportstrom-Bereitsteller ausgelegt ist, um Transportstrom-Pakete mit dem ersten Pakettyp bereitzustellen, die sowohl die Programmzuordnungstabelle (720;1300) als auch die Zugangsbeschränkungsinformation (730) mit der Schlüsselinformation (CA_section; CA_ECM_section) umfassen,
um Transportstrom-Pakete (128;284) mit dem zweiten Pakettyp bereitzustellen, und um Transportstrom-Nutzdaten-Pakete (286) mit einem dritten Pakettyp bereitzustellen, der sich von dem ersten Pakettyp und dem zweiten Pakettyp unterscheidet; und wobei der Transportstrom-Bereitsteller ausgelegt ist, um die Transportstrom-Pakete mit dem ersten Pakettyp, die Transportstrom-Pakete mit dem zweiten Pakettyp und die Transportstrom-Pakete mit dem dritten Pakettyp so bereitzustellen, dass die Transportstrom-Pakete mit dem ersten Pakettyp, die Transportstrom-Pakete mit dem zweiten Pakettyp und die Transportstrom-Pakete mit dem dritten Pakettyp gleiche vorgegebene Paketlängen aufweisen, um einen Transportstrom mit gleich langen Transportstrom-Paketen zu erhalten.

3. Der Transportstrom-Bereitsteller gemäß Anspruch 1 oder Anspruch 2, wobei der Transportstrom-Bereitsteller ausgelegt ist, um die Zugangsbeschränkungsinformation in einem Zusatzinformationsfeld (adaptation_field) des Transportstrom-Pakets (124;282;610;700) des ersten Pakettyps hinzuzufügen, und wobei der Transportstrom-Bereitsteller ausgelegt ist, um eine Anwesenheit des Zusatzinformationsfelds durch einen Merker (adaptation_field_control) zu signalisieren.

4. Der Transportstrom-Bereitsteller gemäß einem der Ansprüche 1 bis 3, wobei der Transportstrom-Bereitsteller ausgelegt ist, um die Transportstrom-Pakete so bereitzustellen, dass jedes der Transportstrom-Pakete an einer vorgegebenen Position einer Transportstrom-Paket-Präambel einen Pakettyp-Identifizierer (PID) aufweist, der einen Pakettyp des jeweiligen Transportstrom-Pakets identifiziert,
wobei der Transportstrom-Bereitsteller ausgelegt ist, um die Transportstrom-Pakete so bereitzustellen, dass ein Transportstrom-Paket (124;282;610;700) mit der Programmzuordnungstabelle (720;1300) und der Zugangsbeschränkungsinformation (730) einen Verweis auf einen Pakettyp-Identifizierer eines Transportstrom-Pakets (128;284;620) mit einer Programmabbildungstabelle, die Pakettyp-Identifizierer für einen oder mehrere Typen von Datenströmen umfasst, aufweist, ohne dass das Transportstrom-Paket (124;282;610;700) mit der Programmzuordnungstabelle und der Zugriffsbeschränkungsinformation selbst den Nutzinhalt der digitalen Medieninformation beschreibt.

5. Der Transportstrom-Bereitsteller gemäß einem der Ansprüche 1 bis 4, wobei der Transportstrom-Bereitsteller ausgelegt ist, um das Transportstrom-Paket (124;282;610;700) mit der Programmzuordnungstabelle und der Zugangsbeschränkungsinformation so bereitzustellen, dass das Transportstrom-Paket mit der Programmzuordnungstabelle und der Zugangsbeschränkungsinformation eine Folge von Abschnitten (CA_section, CA_ECM_section, CA_data) unterschiedlicher Zugangsbeschränkungsinformationen aufweist,
wobei einer der Abschnitte eine Berechtigungsverwaltungsnachricht (EMM) oder einen Verweis auf eine Berechtigungsverwaltungsnachricht aufweist, und
wobei ein anderer der Abschnitte eine Berechtigungsschlüsselnachricht (ECM) oder einen Verweis auf eine Berechtigungsschlüsselnachricht aufweist; und
wobei die Abschnitte der Zugangsbeschränkungsinformation jeweils einen Tabellen-identifizierer (table_{_}id), der die Art der in dem Abschnitt enthaltenen Zugangsbeschränkungsinformation beschreibt, und eine Längeninformation (section_length, CA_{_}info_{_}length), die eine Länge der in dem Abschnitt enthaltenen Informationen beschreibt, umfassen.

6. Der Transportstrom-Bereitsteller gemäß einem der Ansprüche 1 bis 5, wobei der Transportstrom-Bereitsteller ausgelegt ist, um Inhalts-Schlüssel-Informationen (ECM) zur Entschlüsselung einer verschlüsselten Medieninformation ausschließlich in Transportstrom-Pakete (124;282;610;700) mit einer Programmzuordnungstabelle hinzuzufügen, so dass Transportstrom-Pakete (286,288), die den Inhalt der digitalen Medieninformation in Form einer codierten Audioinformation oder in Form einer codierten Bildinformation oder in Form einer codierten Videoinformation beschreiben, frei von Inhalts-Schlüssel-Informationen (ECM) zur Entschlüsselung der verschlüsselten Medieninformation sind.

7. Der Transportstrom-Bereitsteller gemäß einem der Ansprüche 1 bis 6, wobei der Transportstrom-Bereitsteller ausgelegt ist, um den Transportstrom so bereitzustellen, dass der Transportstrom einen Verweis auf einen separaten Kanal, in dem Berechtigungsverwaltungsnachrichten (EMM) übertragen werden, umfasst.

8. Der Transportstrom-Bereitsteller gemäß einem der Ansprüche 1 bis 7, wobei der Transportstrom-Bereitsteller ausgelegt ist, um die Zugriffsbeschränkungsinformation in einem Privatdatenbereich (private data byte) eines Transportstrom-Pakets (124;282;610;700) gemäß ETSI TS 102 428, das die Programm-Zuordnungstabelle (720;1300) gemäß ISO-IEC 13818-1 umfasst, hinzuzufügen.

9. Der Transportstrom-Bereitsteller gemäß einem der Ansprüche 1 bis 8, wobei der Transportstrom-Bereitsteller ausgelegt ist, um in einem Transportstrom Transportstrom-Pakete (124;282;610;700) mit einer Programmzuordnungstabelle und einer Zugangsbeschränkungsinformation zumindest einmal pro Sekunde bereitzustellen.

10. Der Transportstrom-Bereitsteller gemäß einem der Ansprüche 1 bis 9, wobei der Transportstrom-Bereitsteller ausgelegt ist, um weniger als 30 % eines Transportstrom-Pakets (124;282;610;700) mit einer Programmzuordnungstabelle und einer Zugriffsbeschränkungsinformation durch die Programmzuordnungstabelle zu belegen.

11. Ein DAB-Signal-Bereitsteller (200;270) zum Bereitstellen eines DAB-Signals (220;274), das eine zugangsbeschränkte Medieninformation umfasst, mit folgenden Merkmalen:
einem Transportstrom-Bereitsteller (100;230;276) gemäß einem der Ansprüche 1 bis 10, der ausgelegt ist, um Transportstrom-Pakete (124;282;610;700) eines ersten Pakettyps bereitzustellen, die eine Programmzuordnungstabelle und eine Zugangsbeschränkungsinformation umfassen, und um ein Transportstrom-Paket (128;284;620) des zweiten Pakettyps so bereitzustellen, dass das Transportstrom-Paket des zweiten Pakettyps einen Verweis auf Pakettyp-Identifizierer von Transportstrom-Nutzdaten-Paketen (286,288) enthält, und um Transportstrom-Nutzdaten-Pakete (286) eines dritten Pakettyps bereitzustellen, die einen Inhalt eines ersten Medientyps der zugangsbeschränkten Medieninformation beschreiben, und um Transportstrom-Nutzdaten-Pakete (288) eines vierten Pakettyps bereitzustellen, die einen Inhalt eines zweiten Medientyps der zugangsbeschränkten Medieninformation beschreiben,
wobei ein Inhalt zumindest einiger der Transportstrom-Nutzdaten-Pakete des dritten Pakettyps verschlüsselt ist oder ein Inhalt zumindest einiger der Transportstrom-Nutzdaten-Pakete des vierten Pakettyps verschlüsselt ist,
wobei die Transportstrom-Pakete des ersten Pakettyps, die Transportstrom-Pakete des zweiten Pakettyps, die Transportstrom-Pakete des dritten Pakettyps und die Transportstrom-Pakete des vierten Pakettyps Teil eines MPEG2-Transportstroms sind, und
wobei die Zugangsbeschränkungsinformation, die in den Transportstrom-Paketen des ersten Pakettyps enthalten ist, eine Inhalts-Schlüssel-Information (ECM) zum Entschlüsseln der verschlüsselten Inhalte der Transportstrom-Pakete des dritten Pakettyps oder der verschlüsselten Inhalte der Transportstrom-Pakete des vierten Pakettyps umfasst; und
ein DAB-Dienste-Kombinierer (290), der ausgelegt ist, um den MPEG2-Transportstrom mit einem oder mehreren anderen DAB-Diensten (292) zu kombinieren, um das DAB-Signal (274) zu erhalten.

12. Ein Transportstrom-Analysierer (300) zum Bereitstellen einer Zugangsbeschränkungsinformation (320) zum Entschlüsseln einer zugangsbeschränkten digitalen Medieninformation auf der Basis eines Transportstroms (310) mit folgenden Merkmalen:
einem Pakettyp-Identifizierer (330), der ausgelegt ist, um ein Paket (124;282;610;700) eines vorgegebenen ersten Pakettyps, das einen vorgegebenen ersten Pakettyp-Identifizierer aufweist und das eine Programmzuordnungstabelle enthält, als ein identifiziertes Paket (332) zu identifizieren; und
einem Paket-Analysierer, der ausgelegt ist, um das identifizierte Paket (332) nach einer Zugangsbeschränkungsinformation zu durchsuchen und eine darin gefundene Zugangsbeschränkungsinformation (320) bereitzustellen.

13. Der Transportstrom-Analysierer (300) gemäß Anspruch 12, wobei der Transportstrom-Analysierer ferner ausgelegt ist, um die Programmzuordnungstabelle (720;1300) in dem Transportstrom-Paket (124;282;610;700) des vorgegebenen ersten Pakettyps auszuwerten und basierend auf der Programmzuordnungstabelle einen zweiten Pakettyp-Identifizierer zu bestimmen, der einem Transportstrom-Paket (128;284;620) mit einer Programmabbildungstabelle zugeordnet ist;
wobei der Transportstrom-Analysierer einen Pakettyp-Zuordnungs-Bestimmer (350) aufweist, der ausgelegt ist, um basierend auf dem bestimmten zweiten Pakettyp-Identifizierer ein Transportstrom-Paket (128;284;620) mit einer Programmabbildungstabelle in dem Transportstrom (310) zu identifizieren und die Programmabbildungstabelle auszuwerten, um eine Information darüber zu erhalten, welche Pakettyp-Identifizierer Transportstrom-Nutzdaten-Paketen (286,288) zugeordnet sind, die Medieninhalte der zugangsbeschränkten digitalen Medieninformation enthalten.

14. Der Transportstrom-Analysierer gemäß Anspruch 12 oder Anspruch 13, wobei der Transportstrom-Analysierer ferner einen Entschlüssler aufweist, der ausgelegt ist, um verschlüsselte Medieninhalte, die in Transportstrom-Paketen (286,288) mit in der Programmabbildungstabelle beschriebenen Pakettyp-Identifizierern enthalten sind, unter Verwendung der in dem Transportstrom-Paket des vorgegebenen ersten Pakettyps enthaltenen Zugangsbeschränkungsinformation zu entschlüsseln.

15. Der Transportstrom-Analysierer gemäß einem der Ansprüche 12 bis 14, wobei der Paket-Analysierer ausgelegt ist, um das identifizierte Paket (332) des vorgegebenen ersten Pakettyps daraufhin zu untersuchen, ob ein Zusatzinformationsfeld (adaptation_field) eine oder mehrere Tabellen (CA_section, CA_ECM_section, CA_{_}data) aufweist, die durch vorgegebene Tabellenidentifizierer gekennzeichnet sind und eine Zugangsbeschränkungsinformation enthalten, und um die in identifizierten Tabellen enthaltene Zugangsbeschränkungsinformation bereitzustellen.

16. Der Transportstrom-Analysierer gemäß Anspruch 15, wobei der Paket-Analysierer ausgelegt ist, um ansprechend auf ein Auffinden einer ersten Tabelle (CA_section, CA_ECM_section, CA_data), die durch einen ersten vorgegebenen Tabellenidentifizierer gekennzeichnet ist und die eine Zugangsbeschränkungsinformation enthält, und unter Verwendung einer in der ersten Tabelle enthaltenen Tabellenlängeninformation (section_length, CA_{_}info_{_}length) zu überprüfen, ob das Zusatzinformationsfeld des identifizierten Pakets (332) des vorgegebenen ersten Pakettyps anschließend an die erste Tabelle eine weitere Tabelle (CA_{_}section, CA_{_}ECM_{_}section, CA_{_}data) aufweist, die eine Zugangsbeschränkungsinformation enthält, und um die in der weiteren Tabelle enthaltene Zugangsbeschränkungsinformation bereitzustellen.

17. DAB-Empfänger (400) mit folgenden Merkmalen:
einem DAB-Dienste-Trenner (430), der ausgelegt ist, um einen MPEG2-Transportstrom (434) aus einem DAB-Signal (410), das zusätzlich zu dem MPEG2-Transportstrom einen oder mehrere weitere DAB-Dienste umfasst, zu extrahieren; und
einem Transportstrom-Analysierer (300;440) gemäß einem der Ansprüche 12 bis 16, der ausgelegt ist, um den MPEG2-Transportstrom von dem DAB-Dienste-Trenner zu empfangen und die Zugangsbeschränkungsinformation (442) zum Entschlüsseln einer zugangsbeschränkten digitalen Medieninformation auf der Basis des Transportstroms bereitzustellen; und
einem Inhalts-Entschlüssler (450), der ausgelegt ist, um verschlüsselte Medieninhalte der zugangsbeschränkten digitalen Medieninformation unter Verwendung der Zugangsbeschränkungsinformation (442) zu entschlüsseln.

18. Verfahren zum Bereitstellen einer Mehrzahl von Transportstrom-Paketen, die eine digitale Medieninformation beschreiben, mit folgenden Schritten:
Bereitstellen eines Transportstrom-Pakets eines ersten Pakettyps mit einer Programmzuordnungstabelle und einer Zugangsbeschränkungsinformation mit einer Schlüsselinformation zur Entschlüsselung einer verschlüsselten Medieninformation, wobei die Programmzuordnungstabelle eine Zuordnung zwischen einer Programm-nummer und einem Pakettyp-Identifizierer eines weiteren Transportstrom-Pakets (128;284;620) eines zweiten Pakettyps enthält; und
Bereitstellen eines Transportstrom-Pakets (124;282;610;700) des zweiten Pakettyps, so dass das Transportstrom-Paket des zweiten Pakettyps einen Verweis auf Pakettyp-Identifizierer von Transportstrom-Nutzdaten-Paketen (286,288) enthält, die Inhalte verschiedener Inhaltstypen der digitalen Medieninformation beschreiben.

19. Verfahren zum Bereitstellen einer Zugangsbeschränkungsinformation zum Entschlüsseln einer zugangsbeschränkten digitalen Medieninformation auf der Basis eines Transportstroms mit folgenden Schritten:
Identifizieren eines Transportstrom-Pakets (124;282;610;700) eines vorgegebenen ersten Pakettyps, das einen vorgegebenen ersten Pakettyp-Identifizierer aufweist und das eine Programmzuordnungstabelle enthält, als ein identifiziertes Paket;
Durchsuchen des identifizierten Pakets nach einer Zugangsbeschränkungsinformation; und
Bereitstellen einer in dem identifizierten Paket gefundenen Zugangsbeschränkungsinformation.

20. Computerprogramm zur Durchführung eines Verfahrens gemäß Anspruch 18 oder Anspruch 19, wenn das Computerprogramm auf einem Computer abläuft.

21. Transportstrom-Signal mit folgenden Merkmalen:
einem Transportstrom-Paket (124;282;610;700) eines ersten Pakettyps mit einer Programmzuordnungstabelle und Zugangsbeschränkungsinformation mit einer Schlüsselinformation zur Entschlüsselung einer verschlüsselten Medieninformation, wobei die Programmzuordnungstabelle eine Zuordnung zwischen einer Programm-nummer und einem Pakettyp-Identifizierer eines weiteren Transportstrom-Pakets (128;284) eines zweiten Pakettyps enthält; und
einem Transportstrom-Paket (128;284) des zweiten Pakettyps, wobei das Transportstrom-Paket des zweiten Pakettyps einen Verweis auf Pakettyp-Identifizierer von Transportstrom-Nutzdaten-Paketen (286,288) enthält, die Inhalte verschiedener Inhaltstypen der digitalen Medieninformation beschreiben.
